(19) Europäisches Patentamt / European Patent Office / Office européen des brevets

(11) **EP 2 141 648 A1**

(12) **EUROPEAN PATENT APPLICATION**

(43) Date of publication:
06.01.2010 Bulletin 2010/01

(51) Int Cl.:
*G06Q 40/00* (2006.01)

(21) Application number: 09251672.3

(22) Date of filing: 29.06.2009

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **02.07.2008 US 217456**
**22.01.2009 US 321600**
**22.01.2009 US 321601**
**22.01.2009 US 321602**

(71) Applicant: **Automated Equity Finance Markets, Inc.**
**New York, NY 10017 (US)**

(72) Inventors:
• **DePetris, Gregory Wayne**
**Guildford, CT 06437 (US)**
• **Hakker, Martin Rein**
**Northport, NY 11768 (US)**
• **Little, Thomas Walter, Jr.**
**Hoboken, NJ 07030 (US)**
• **Poliakoff, Sergei**
**New York, NY 10016 (US)**

(74) Representative: **Lewis, Darren John et al**
**D Young & Co**
**120 Holborn**
**London EC1N 2DY (GB)**

(54) **Negotiated trade facility for securities lending**

(57)    A computer program provides a screen-based interface enabling anonymous negotiation between a buyer and a seller. Parties wishing to trade enter values into fields of a screen-based interface, thereby creating a trading interest, and may select from terms associated with each of the fields to augment the trading interest. The parties may also specify counter-party filtering criteria in the trading interest. The computer program then displays to the creator of the trading interest any previ-
ously entered trading interests that might result in a trade, and that satisfy the counter-party filtering criteria, if any. The computer program also displays the new trading interest to the creators of the previously entered trading interests. Two of the parties may agree to negotiate using structured messages that maintain their anonymity. The identities of the counter-parties need not be known to each other as, after a trade agreement is reached, a central clearing party becomes the counter-party to each of the parties via a novation.

Fig. 5

**Description**

## BACKGROUND OF THE INVENTION

This invention relates to a computer program that conducts a negotiation dialog between two parties who remain anonymous to each other.

A popular way of conducting a dialog between two parties using a computer system is referred to as instant messaging, wherein each party has a screen display having a pop-up window, and can enter free-form text into the window. The entered text is also sent to the other party, so that both parties see what each of them have entered and sent. If the parties take turns, then they are having a dialog.

A provider of a trading system may wish to enable parties to negotiate via instant messaging. However, since instant messaging enables free-form text entry, the parties can readily discover each other's identity, and trade outside the system, thereby depriving the trading system of transaction-related revenue.

Accordingly, there is a need for a way for parties to negotiate but not bypass the trading system.

## SUMMARY OF THE INVENTION

In accordance with the present invention, there is provided a method for enabling anonymous negotiation, comprising displaying, by a computer program executing on a computer, at least one trading interest from one of a buyer and a seller to the other of the buyer and the seller, receiving a negotiation request from the other of the buyer and the seller for a trading interest selected from the at least one displayed trading interest, receiving a negotiation acceptance from the one of the buyer and the seller, and enabling, by the computer program, the one of the buyer and the seller and the other of the buyer and the seller to send structured messages to each other, the structured messages lacking identification of the buyer and the seller.

It is not intended that the invention be summarized here in its entirety. Rather, further features, aspects and advantages of the invention are set forth in or are apparent from the following description and drawings.

## BRIEF DESCRIPTION OF THE DRAWINGS

Fig. 1 is a block diagram showing the conventional relationships between a borrower, a lender and a prime broker for a securities loan;

Fig. 2 is a block diagram showing entities conventionally participating in a securities loan and a securities trade;

Fig. 3A-3B are a flowchart showing conventional actions involved in a securities loan for a short sale and the associated short sale trade;

Fig. 4 is a block diagram showing a borrower, a lender and an automated market for securities loan;

Fig. 5 is a more detailed block diagram of the entities in Fig. 4;

Fig. 6 is a chart showing hypothetical loan profiles for four different market participants;

Fig. 7 is a chart showing daily activity for four hypothetical market participants;

Figs. 8A-8C are a flowchart showing automated establishment of a securities loan;

Figs. 9A-9C are a flowchart showing automated incentives for a borrower;

Figs. 10A-10B are a flowchart showing automated incentives for a lender;

Fig. 11 shows a conventional processing flow;

Fig. 12 is a block diagram showing an automated loan market system;

Fig. 13 is a diagram showing a hierarchical relationship between clearing member and non-clearing member accounts;

Fig. 14 is a flowchart showing processing flow for an anonymous stock loan;

Fig. 15 is a flowchart showing processing at depository corp. 60 for an anonymous stock loan;

Fig. 16 is a flowchart showing negotiated trading;

Fig. 17 is a diagram of a screen display used in creating a trading interest during negotiated trading;

Figs. 18A-18C are diagrams depicting the software components of a middle office software component of an automated loan market system;

Fig. 19 is a flowchart showing forced buy-in processing; and

Fig. 20 is a flowchart showing forced sell-out processing.

## DETAILED DESCRIPTION

Finding ways to affect trading programs in similar manner as relationships affect person-to-person trading is important as demands for "transparency" increase which in turn place scrutiny on person-to-person trading.

Desirable behavior refers to activity that leads to a marketplace with desirable characteristics such as deeper liquidity, smaller buy-sell quote spreads, reduced systemic risk and more equitable access for market participants. Undesirable behavior leads away from a marketplace with desirable characteristics. Undesirable behavior also includes using the marketplace only for price discovery ("gaming" or "bypass") with intent to execute in another marketplace. In particular, gaming behavior is characterized by chronic sending of orders to the marketplace, determining as much price information as possible, then cancelling the orders generally to the detriment of other market participants.

An automated marketplace is separated into tiers, with objectively evaluated behavioral requirements for each tier. Tier eligibility is a "structural incentive" for market participants to exhibit desirable behavior and eschew undesirable behavior. Tiered eligibility also reflects the natural imbalance of liquidity in the market and the need to preserve the identity of a class of liquidity providers, which further leads to a structure that can preserve the integrity of person-to-person trading relationships even in an automated environment.

Within each tier, participant behavior leads to a ranking for that participant. When specific events occur, these events are allocated based on participant ranking. Participant ranking is an "activity incentive" for market participants to exhibit good behavior and eschew bad behavior.

Certain events are defined as desirable or undesirable, and when performed by a market participant, lead to positive incentives or negative incentives, of structural and/or monetary type. Incentives encourage market participants to exhibit good behavior and eschew bad behavior.

Automated structural, activity and economic incentives will now be discussed in the context of the securities lending marketplace. Use of incentives is not limited to securities lending. Incentives are useful in a wide variety of situations such as pollution rights trading, derivative financial markets that provide liquidity rebates, and so on; market examples include ISE, ARCA.

Incentives are not limited to the disclosed types of incentives.

The conventional U.S. securities lending marketplace will now be discussed.

A normal or "long" sale is the sale of a security that the seller presently owns.

A "short" sale is the sale of a security that the seller does not own or any sale that is consummated by the delivery of a security borrowed by, or for the account of, the seller. Usually, a short seller expects the market price for a security to decrease; a short seller sells now, expecting to buy at a lower price in the future to close out her position. This is a profitable strategy when it achieves the sequence of sell high then buy low. The ease of short selling is crucial for effective arbitrage. Short sellers generally do not know how long they will maintain their position.

Short sellers include hedge funds, mutual funds (if permitted by the rules of the fund), institutional investors, retail investors, brokers trading for their own account, arbitrageurs, market makers, risk managers, speculators, and so on.

Securities lending contributes to the overall liquidity and efficiency of equity and equity options markets.

The major reason that someone wants to borrow securities is to accomplish or facilitate a short sale in compliance with the Securities and Exchange Commission (SEC) regulations. Specifically, SEC Regulation SHO requires short sellers in all equity securities to locate securities to borrow before selling, see http://www.sec.gov/rules/final/34-50103.htm. Other reasons for borrowing securities, referred to as "permitted purposes" under Regulation T of the Board of Governors of the Federal Reserve System, include (i) to prevent a settlement failure, and (ii) for establishing an Exchange Traded Fund (ETF). The permitted purpose need not be accomplished by one of the parties, but must occur somewhere in an associated transaction. Firms with a large number of active retail accounts and substantial revenue are exempt from the permitted purpose regulation and so can borrow for any reason.

For options market participants, securities lending support market making, arbitrage trading, equity financing and assists participants in meeting deliveries resulting from options exercises and assignments.

Securities lenders, or their agents, are parties that presently own the security. The legal owner of a security is referred to as the "beneficial owner". Lenders wish to lend to make profit on their securities inventories that are otherwise idle. Custody banks are the largest lenders in the US market, lending as agents on behalf of large institutional owners such as pension funds, public retirement funds, mutual funds and endowments. Additionally, brokers want to lend to enable their customers to accomplish short sales. Securities lending and margin finance are responsible for over half of prime brokerage revenues. At end 2007, US$2.1 trillion of equities were on loan in U.S. markets.

Some security owners find short selling distasteful and will not lend as they believe short selling facilitates downward price pressure, thereby devaluing their inventory.

If not for certain "Prohibited Transaction Exemptions" issued by the U.S. Department of Labor, employee benefit plans would refrain from lending to avoid violating provisions of the Employee Retirement Income Security Act of 1974 ("ERISA").

A short sale consists of a trader selling stock that the trader does not own on trade day (T), and delivering borrowed stock on settlement day, which is the third day after the trade day (T+3). Eventually, the trader closes her position by buying stock, and terminating the stock loan. That is, the trade occurs on T, while the stock loan occurs on T+3. The trade settlement also occurs on T+3.

To bridge the time difference between T and T+3, "locate" practice is used in the securities industry. A locate is an affirmative determination that a party will provide the named quantity of securities three days hence.

A trader can obtain a locate by asking a broker, such as by telephone, email or instant message, or by consulting a locate file provided by the broker to the trader each morning, listing the inventory that the broker has available to loan. Not all locates are actually converted into loans. Reasons for non-conversion include that the stock is either not needed as the short seller closed her position prior to T+3 or that the stock was actually loaned by a party other than the locate provider.

A broker maintains lendable securities inventories when the broker trades for its own account, and when the broker holds securities on behalf of the margin accounts of customers who have bought the securities. Section 8 of the Exchange Act of 1934 prohibits brokers from lending shares held in retail cash accounts or retail non-margin accounts. Usually, when a retail customer opens a brokerage account, the terms of the account permit the broker to rehypothecate and lend securities that the customer holds.

In exchange for a loan, the customer provides cash collateral in an amount slightly greater than the value of the securities, such as $102 of cash for each $100 of securities value. The broker pays interest to the securities borrower on the cash collateral. The "rebate rate" is the interest rate paid for the cash collateral. Negative rebates can and do occur, corresponding to expensive loans.

A securities loan is for a period of one-day and is self-renewing ("overnight self-renewing") unless either (a) the borrower returns the shares of the security, or (b) the lender recalls the shares of the security.

If the value of the security fluctuates, the amount of required cash collateral correspondingly fluctuates, so the borrower may have to supply more money or may receive money back.

If the broker lacks its own inventory to make a securities loan, the broker finds a lender, then the broker enters into a first securities loan contract with the lender, and then enters into a second securities loan contract with the borrower. The terms of the loan contracts are different, theoretically providing profit to the broker for its services in arranging the loan.

Generally, the loans have standardized terms and conditions, but the interest rates are different depending on the relationships between the parties (long-standing relationship vs. first transaction), the amount of stock being loaned (small loans tend to be more expensive per share) and the characteristics of the security (readily available vs. hard to find) (amount of general collateral stock relative to amount of non-general collateral stock), and so on.

In the U.S., the Securities Industry and Financial Markets Association (SIFMA) provides and updates standardized terms for securities loans as the Master Securities Loan Agreement (MSLA), available at www.sifina.org/services/stdforms/pdf/master_securities_loan_agreement_2000_version.pdf

In Europe, the International Securities Lending Association (ISLA) provides an updates standardized terms for securities loans as the Global Master Securities Loan Agreement (GMSLA), available at http://www.isla.co.uk/docs/Gmsla%202000%20version.doc.

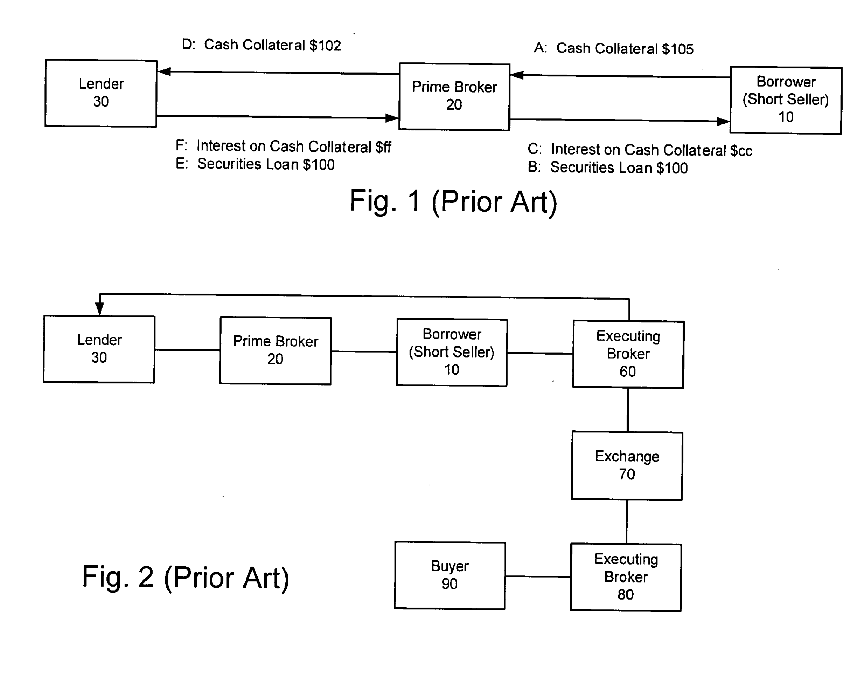

Fig. 1 is a block diagram showing the conventional relationships between borrower 10, prime broker 20 and lender 30 for a pair of securities loans.

The first loan involves, at action A, borrower 10 providing cash collateral to broker 20, such as $105 per $100 of securities value. At action B, broker 20 provides a loan of the security shares to borrower 10, and at action C, broker 20 provides interest on the cash collateral to borrower 10. The interest is computed and credited to borrower 10 on a daily basis. The interest is expressed relative to the Federal Funds (FF) overnight interest rate, i.e., FF minus bb basis points.

The second loan involves, at action D, broker 20 providing cash collateral to lender 30, such as $102 per $100 of securities value. At action E, lender 30 provides a loan of the security shares to broker 20, and at action F, lender 30 provides interest on the cash collateral to broker 20. The interest computed and credited to borrower 10 on a daily basis. The interest is expressed relative to the Federal Funds overnight interest rate, i.e., FF minus ee basis points.

Broker 20 can make profit (or loss) from the difference in cash collateral between the first and second loans, and from the difference in interest paid on the cash collateral between the first and second loans.

The price of a stock loan means the interest rate paid to the borrower on the cash collateral posted to the lender. The borrower is not actually paying anything, but rather, choosing to accept more or less interest on the collateral.

From the borrower's perspective, "to pay more" means to accept a low interest rate on the loan. For easy to borrow, widely available securities, borrowers expect to be paid higher interest rates on their cash collateral. The borrower has some choices for sources of the stock, and is thus unwilling to pay a premium for the inventory.

From the lender's perspective, "to pay more" means to pay higher interest on the collateral. Lenders expect to pay higher interest rates when loaning very liquid securities. Ultimately, the lender profits are the difference between the cash reinvestment rate they earn internally relative to the rate paid to the borrower, or the difference between the interest rate the lender borrowed the stock at, and the rate they lend it at. In either case, a profit-maximizing lender chooses to offer securities at the lowest market clearing interest rate.

Fig. 2 is a block diagram showing entities conventionally participating in a securities loan and a securities trade. On trade day T, borrower 10 obtains a locate to engage in a short sale of stock shares. Prime broker 20 provides the locate to borrower 10. If necessary, prime broker 20 obtains inventory for the locate via a second locate with lender 30. Borrower 10 sends its short sale order to executing broker 60, which relays it to exchange 70. Exchange 70 matches the short sale order with a buy order from buyer 90, relayed to exchange 70 via executing broker 80.

Prime broker 20, executing broker 60 and executing broker 80 are shown as different entities. In practice, one firm may fulfill one, two or three of these roles.

On settlement day, T+3, executing broker 60 actually makes the loan to borrower 10, from its inventory or if necessary, by borrowing stock from lender 30 (the same or a different instance of lender 30 that may have participated in the locate).

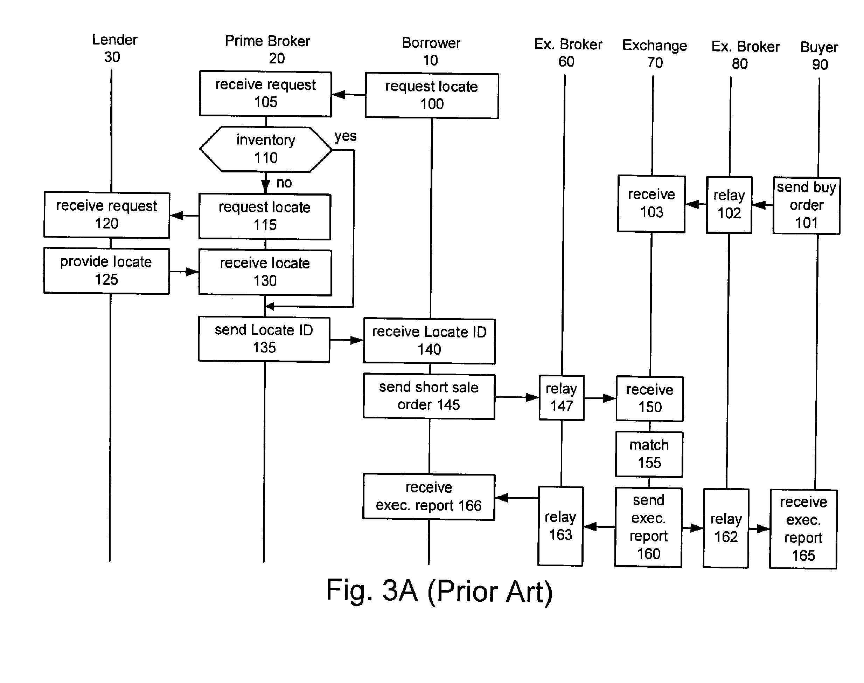

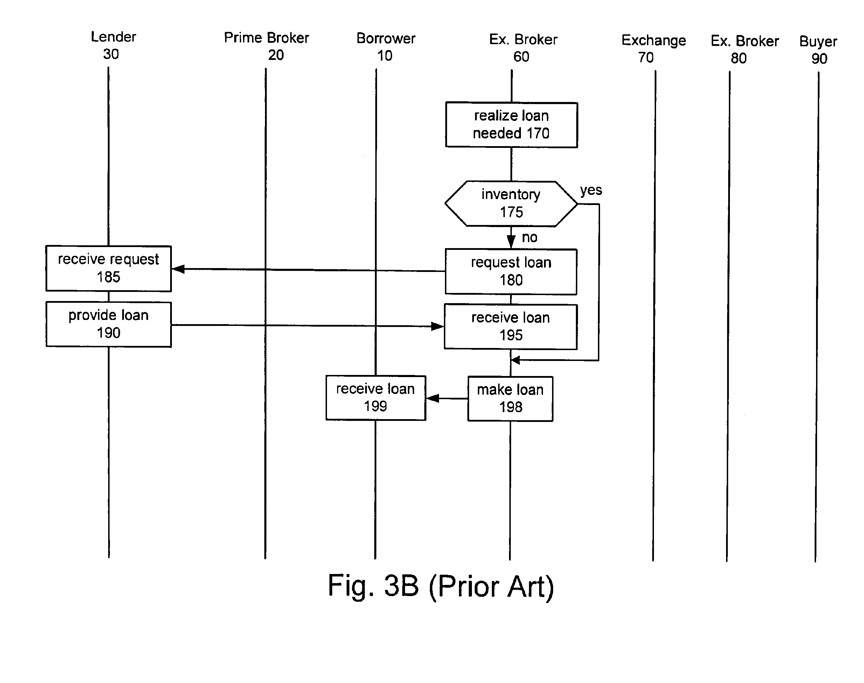

Figs. 3A and 3B are a flowchart showing conventional actions involved in a securities loan for a short sale and the associated short sale trade, as generally described above. Fig. 3A shows activity on trade day T. Fig. 3B shows activity on settlement day T+3.

At step 100, borrower 10 requests a locate from broker 20, such as by calling broker 20 or sending an e-mail to broker 20. In some embodiments, borrower 10 checks a locate file supplied to her each morning by broker 20. Borrower 10 can manually check the locate file, or the execution management system (EMS) being used by borrower 10 to enter a short order can automatically check the locate file and append the Locate ID to the short order.

Meanwhile, at step 101, buyer 90 sends a buy order for the security that borrower 10 is interested in to executing broker 80. At step 102, broker 80 receives the buy order and relays it to exchange 70. At step 103, exchange 70 receives the buy order.

At step 105, broker 20 receives the locate request. At step 110, broker 20 checks its stock inventory. The checking may occur via a person consulting an inventory database, or by a computer system checking a locate file. If broker 20 has sufficient inventory to provide the requested locate, then action continues at step 135. If broker 20 lacks sufficient inventory to provide the requested locate, then at step 115, broker 20 requests a locate, either by calling potential lenders on the telephone, by emailing potential lenders, or by checking an online system with locate files from third parties.

At step 120, lender 30 receives the locate request from broker 20, and at step 125, provides the locate. At step 130, broker 20 receives the locate from lender 30.

At step 135, broker 20 sends a locate to borrower 10. The locate identifies broker 20 and enables broker 20 to locate the specific shares promised for the loan to borrower 10. At step 140, borrower 10 receives the locate ID from broker 20. At step 145, borrower 10 sends a short sale order to executing broker 60, including the locate ID. At step 147, broker 60 relays the short sale order to exchange 70.

At step 150, exchange 70 receives the short sale order. At step 155, exchange 70 matches the short sale order received at step 150 with the buy order received at step 130. At step 160, exchange 70 sends an execution report to each of executing broker 60 and executing broker 80.

At step 162, executing broker 80 relays the execution report to buyer 90.

At step 163, executing broker 60 relays the execution report to borrower 10.

At step 166, borrower 10 receives the execution report from executing broker 60.

Turning to Fig. 3B, on day T+3, at step 170, the computer system for executing broker 60 realizes that a loan is needed to enable settlement of the short sale executed on day T. At step 175, the computer system for broker 60 checks its inventory. If broker 60 has sufficient inventory to make the loan, processing continues at step 199.

If broker 60 lacks sufficient inventory to make the loan, then at step 180, broker 60 requests a stock loan from lender 30. At step 185, lender 30 receives the stock loan request and at step 190, provides the securities loan and decrements its inventory of lendable stock. At step 195, broker 60 receives the securities loan.

At step 198, broker 60 makes a securities loan to borrower 10 and decrements its inventory of lendable stock. At step 199, borrower 10 receives the securities loan.

As mentioned, the securities loan is usually an overnight self-renewing loan. On day T+4, interest starts to be paid on the cash collateral from the collateral holder to the collateral provider. The daily interest rate is usually expressed relative to the Federal Funds rate which can change daily.

A small amount of the securities loan market occurs in a centralized clearinghouse environment called the OCC Stock Loan Program, a trade reporting facility that allows OCC's clearing members to use borrowed and loaned securities to reduce OCC margin requirements. In this program, the loan is legally between the borrower and lender, that is, non-anonymous, and OCC guarantees mark-to-market payment between the program participants.

So-called "processing systems" exist, such as Equilend and Loanet. Processing systems consolidate and track information about stock loans, typically negotiated by telephone and then entered to a processing system to avoid keeping paper activity records. Processing systems also perform other functions.

The above-described securities loan market is evolving as new types of clients have come into existence, is fraught with inefficiency and has problems.

A situation in the securities loan market is that as the years go by, margins in the securities loan business have been getting thinner because the financing costs paid by borrowers has been generally decreasing while infrastructure costs have remained approximately constant; meanwhile, the business is capital intensive and requires specialized staff who understand the arcane practices in the business.

Another situation in the securities loan market is the emergence of high frequency traders such as day traders and statistical arbitrageurs.

So called "day traders" close out their positions at the end of each day. A day trader may execute a short sale in the morning, and will then buy the stock before the end of the day. In these situations, a loan will never occur; nevertheless, a locate is required for the short sale. Day traders bring the overhead of a locate but no chance of a loan. An automated service, www.locatestock.com, fills this niche, that is, brokers that grant locates via this automated service charge a fee for each locate, expecting that a loan will not occur.

So called "statistical arbitrageurs" use statistical techniques to exploit trading opportunities that are usually intra-day, but can be longer.

In the remainder of this document, the needs of non-settling borrowers are ignored.

Another aspect of the securities loan market is that some customers are using trading strategies that cause them to close their short positions very quickly, such as within a few days.

If borrower 10 returns the stock after only a few days, say on T+4 through T+8, then the lender(s) have virtually no time to make profit, that is, the slim profit they make just about covers their expenses. Reasons for stock returns include closing some or all of the short position, and finding a cheaper stock loan.

From the viewpoint of a lender, stock returns are undesirable behavior. In contrast, borrowers who borrow for a long time are desirable customers.

A substantial problem for a short seller is a lender recall of the securities loan. As permitted in the standard securities lending agreement, lender can take back, or recall, its stock for a variety of reasons: to sell the stock according to a trade decision, to lend the stock to a different customer, to participate in a shareholder vote, or because the lender must obtain "possession and control" of customers' fully-paid and excess margin securities out on loan to comply with SEC Rule 15c3-3 (customer protection) and/or SEC Rule 15c3-1 (capital requirements for a firm). Recall rights sometimes exist for tax purposes: the IRS (Section 1058) requires a recall provision for manufactured dividend payments to remain nontaxable income (for certain exempt funds) and for the loan not to be treated as a sale.

Usually, broker 20 tries very hard to find substitute stock for borrower 10. If substitute stock cannot be found, then borrower 10 is forced to close ("cover") its short position immediately, which may wreak havoc with its trading strategy, and lead to a big loss during a "short squeeze", that is, a situation in which the price of the stock rises and investors who sold short rush to buy it to cover their short position and cut their losses. As the price of the stock increases, more short sellers feel compelled to cover their positions. In many cases, borrower 10 cannot simply create a new short position to replace the closed position as a new loan is unavailable. Borrowers consider a forced closing of their short position during a falling market to be a horrible event.

From the viewpoint of a borrower, stock recalls are disruptive events. Borrowers assert that prime brokers who protect the borrowers from recalls, by finding substitute stock for recalled stock, provide a valuable service. In contrast, lenders who lend as long as the borrower desires are trustworthy and preferred. The largest prime brokers state that they operate for years without recalling securities loans to their clients.

Generally, borrowers face the following challenges in the securities loan market: first, finding the stock; second, whether the loan is stable, i.e., not subject to a recall; third, getting the loan at as low a price as possible subject to stability; and fourth, whether the counterparty is creditworthy.

Thus, there is room for improvement in the securities loan market.

An automated marketplace for securities lending will now be discussed.

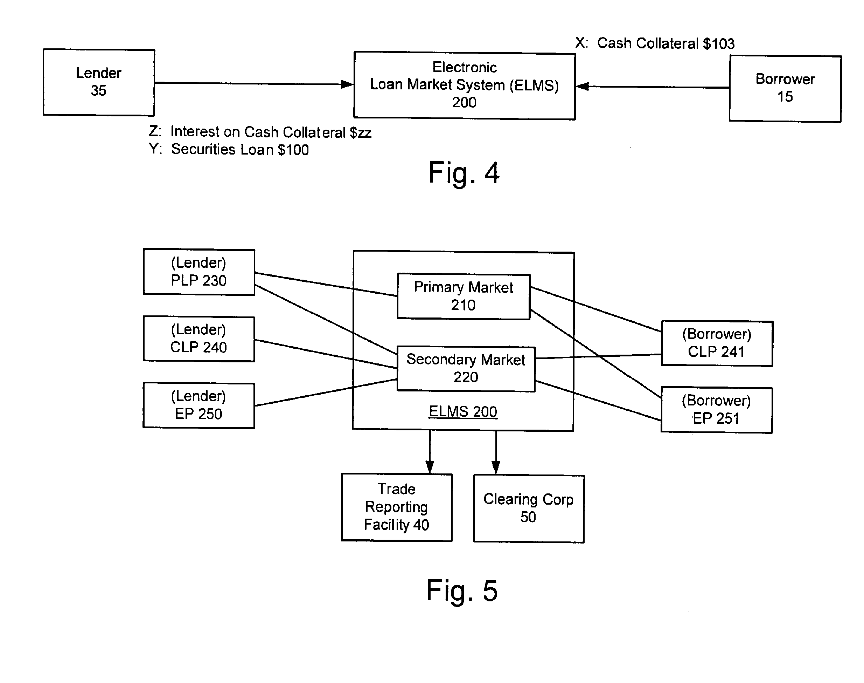

Fig. 4 is a block diagram showing borrower 15, lender 35 and electronic loan market system (ELMS) 200. ELMS 200 is a computer system having one or more general purpose computers executing software for performing its functions, as discussed below, along with suitable communication facilities for its users, also referred to a market participants, specifically lender 35 and borrower 15, and suitable memory and storage.

Generally, lender 35 makes stock inventory available to ELMS 200. Lender 35 may be the parties discussed above as suitable for lender 30 or broker 20. ELMS 200 maintains a record of available inventory, by security. Borrower 15 sends a loan request to ELMS 200 and, after competing for the loan in ELMS 200, receives a loan commitment and a locate ID. Borrower 15 may be the parties discussed above as suitable for borrower 10 or broker 20.

The loan involves, at action X, borrower 15 providing cash collateral to lender 35, such as $103 per $100 of securities value. At action Y, lender 35 provides a loan of the security shares to borrower 15, and at action Z, lender 35 provides interest on the cash collateral to borrower 15. The interest payable is calculated daily, accrued, and paid at the end of the month to borrower 15. The interest is expressed relative to the Federal Funds (FF) overnight interest rate, i.e., FF minus zz basis points.

The identities of the parties to a loan are not known to each other. Accordingly, the personal relationships in the conventional securities loan market that deter undesirable behavior are entirely absent in the environment of Fig. 4, resulting in severe risk of negative externalities.

Automated structural, activity and economic incentives are provided in ELMS 200 to deter bad behavior and promote good behavior. Bad behavior refers to lender stock recalls and borrower stock returns, and other "gaming" behavior such as high frequency of cancellation of offers to borrow or lend, overly aggressive re-rates (a "re-rate" is a request to change the rate of a loan, initiated by either the borrower or seller, and sent to the universe of participants involved in lending the stock). Good behavior refers to lenders not recalling stock, and borrowers keeping the loan outstanding for long durations and having a low frequency of order cancellation and eschewing re-rates.

Structural incentives will now be discussed.

As a structural incentive, ELMS 200 is separated into two tiers, primary market 210 and secondary market 220. In other embodiments, three or more tiers may be provided. Primary market 210 is intended for participants exhibiting good behavior, that is, to replicate the stability available in the conventional un-centralized (distributed) securities loan market. Secondary market 220 is intended for all other participants, i.e., those exhibiting generally reasonable behavior. Secondary market 220 is suitable for lenders who are comfortable operating differently than conventional large lenders.

The costs of obtaining a securities loan in primary market 210 are more than the costs in secondary market 220 to compensate lenders for expected stability. In other words, some borrowers prefer to pay a premium for stable supply and choose the more stable primary market 210 relative to the less stable secondary market 220. Thus, the primary market is structured to promote desirable behavior.

The process is identical for market tiers, with the differences being (i) the expectations of stability and price, and (ii) the eligible participant list for each market. The primary and secondary markets operate independently with separate auctions.

Inventory can be transferred between the primary and secondary pools depending on the access level of participants in the system. For example, it is possible for a borrower to remove inventory from the primary market to lend it to the secondary market, if the economics are favorable.

Fig. 5 is a more detailed block diagram of the entities in Fig. 4. ELMS 200 comprises primary market 210, secondary market 220, and associated facilities for record-keeping and reporting. ELMS 200 is a general purpose computer or computers that cooperate to execute a software program or programs according to the present invention. The entities in Fig. 5 communicate via wireline or wireless communications, using suitable ones of dedicated communication channels, private networks and/or public networks. ELMS 200 is provided with suitable equipment, such as memory, storage (e.g., magnetic, optical, magneto-optical or other suitable storage), input peripherals (e.g., keyboard, voice input, communication channel input) and output peripherals (e.g., displays, printers). ELMS 200 is provided with suitable software infrastructure, such as operating system, communication channel drivers, device drivers and so on.

Securities loans arranged through ELMS 200 are automatically reported by ELMS 200 to trade reporting facility 40 and clearing entity 50. ELMS 200 also provides a facility (not shown) for its participants to report manually negotiated securities loans to trade reporting facility 40 and clearing entity 50. Trade reporting facility 40 may be an existing processing service such as Equilend or Loanet. Clearing entity 50 may be one or more of Options Clearing Corporation (OCC), Depository Trust Clearing Corporation (DTCC), National Securities Clearing Corporation (NSCC), Boston Stock Exchange Clearing Corporation, Philadelphia Stock Exchange Clearing Corporation, or other suitable SEC regulated CA-1 facility that can clear security trades.

ELMS 200 arranges and records loans.

Clearing entity 50 is the counterparty to each loan.

Clearing entity 50 obviates the conventional privity between borrower and lender. Privity is a direct relationship between parties to a contract or transaction sufficient to support a legal claim. Benefits include: (i) operationally simpler - no separate loan agreement for each loan; (ii) more cost effective - reduced legal costs; and (iii) anonymous. Because ELMS 200 is involved in arranging each transaction, it can allocate activity according to an incentive system, and can be structured to facilitate incentives.

A lender is classified as one of primary liquidity provider (PLP) 230, competitive liquidity provider (CLP) 240 and electronic participant (EP) 250. Initially, a lender is assigned to one of these three categories, and over time, if the lender does not conform to the behavior required for the category, the lender may have its permissions and capabilities adjusted or may be re-assigned to another category. As discussed below, the lenders in each category are also ranked within the category. In other embodiments, different categories may be provided, such as a further category PLP+.

A borrower is one of CLP 241 and EP 251. By definition of a PLP, a PLP is only a lender. Examples of a PLP include insurance companies and pension funds. An EP is permitted to lend only in the secondary market. CLP 240 and CLP 241 are entities in the same category, but one is acting as a lender and the other as a borrower. A CLP entity can be either a lender or a borrower over the course of its life, but in a particular transaction it assumes one role. EP 250 and EP 251 are, similarly, entities in the same category but one is acting as a lender and the other as a borrower.

Borrowers generally request a loan to either (i) refinance an existing (already settled) short position, or (ii) provide inventory for an executed short order that is settling.

The specific category characteristics for a PLP, CLP and EP are outside the scope of the present application.

Another structural incentive is the excellent credit rating of clearing entity 50 that guarantees the daily mark-to-market of cash flows in the event of counter-party default. For example, assume that a borrower provided $102 cash for $100 of securities, and that the securities lender then went out of business and did not return the cash. Without a guarantee, the borrower would lose $2 plus any increase in the market value of the securities. The borrower loses the difference between the cash posted and the stock price, therefore if the stock price goes down the borrower loses more money as the collateral he holds is worth less. Of course, if the securities had increased in value sufficiently, the borrower would have a net gain. With a guarantee, clearing entity 50 reimburses the borrower for her loss, if any.

Activity incentives will now be discussed.

U.S. Patent No. 6,618,707 (Katz) discloses a system for automating options trading in which an incoming order is filled against quotations based on the size of the quotations, as an incentive for members to provide quotations of more than the minimum size. This is an example of a positive activity incentive.

Another example of a positive activity incentive is the practice of certain prior art marketplaces paying participants for order flow.

Within each market tier of ELMS 200, participant behavior leads to a ranking for that participant. When specific events, such as new loans, returns, recalls, re-rates and so on occur, these events are allocated based on participant ranking. Desire to avoid unwanted events, and to receive desired events, leads participants to care about their ranking. This is similar to how personal relationships induce people to behave better. Studies of eBay's feedback system indicate that the mere existence of a mechanism that monitors behavior can improve performance of parties using a transactional system.

The ranking may be a unique sequential rank within a category of participant or marketplace tier, or may be a market-wide (global) level of rank, such as "superior", "normal", "poor" and so on.

An example of how a participant's behavior can change their ranking is now discussed.

Assume that rank is a unique sequential number, and category is PLP, and there are five PLP participants: PLP-1, PLP-2, PLP-3, PLP-4 and PLP-5. Further assume that, at the start of the day, their ranking was as shown in Table 1, corresponding to the number of loan recalls ever initiated by the participant.

TABLE 1

| Rank | Participant | No. recalls |
|------|-------------|-------------|
| 1 | PLP-1 | 6 |
| 2 | PLP-2 | 4 |
| 3 | PLP-3 | 2 |
| 4 | PLP-4 | 1 |
| 5 | PLP-5 | 0 |

Let it be assumed that during the day, there were only two recalls in primary market 210 and both recalls were from PLP-4 that formerly had only one (1) recall. At the end of the day, ELMS 200 adjusts the rankings so that PLP-4, with three (3) recalls, has a higher rank as shown in Table 2.

TABLE 2

| Rank | Participant | No. recalls |
|------|-------------|-------------|
| 1 | PLP-1 | 6 |
| 2 | PLP-2 | 4 |
| 3 | PLP-4 | 3 |
| 4 | PLP-3 | 2 |
| 5 | PLP-5 | 0 |

In other embodiments, the recalls are measured relative to a moving window, for example, the last two weeks, or percentage of the last 100 loans, or any other suitable metric.

The rankings operate as a sort of automated Golden Rule: do unto ELMS 200 as you would have it do unto you. That is, the more undesirable behavior (loan recalls) that a PLP participant initiates, the more undesirable behavior (stock returns) will the PLP be subject to.

Economic incentives will now be discussed.

Certain events are defined as desirable or undesirable, and when performed by a market participant, incur monetary incentives or disincentives. Here, it is useful to define behavior as relative to a benchmark for what is normal for a category of market participant.

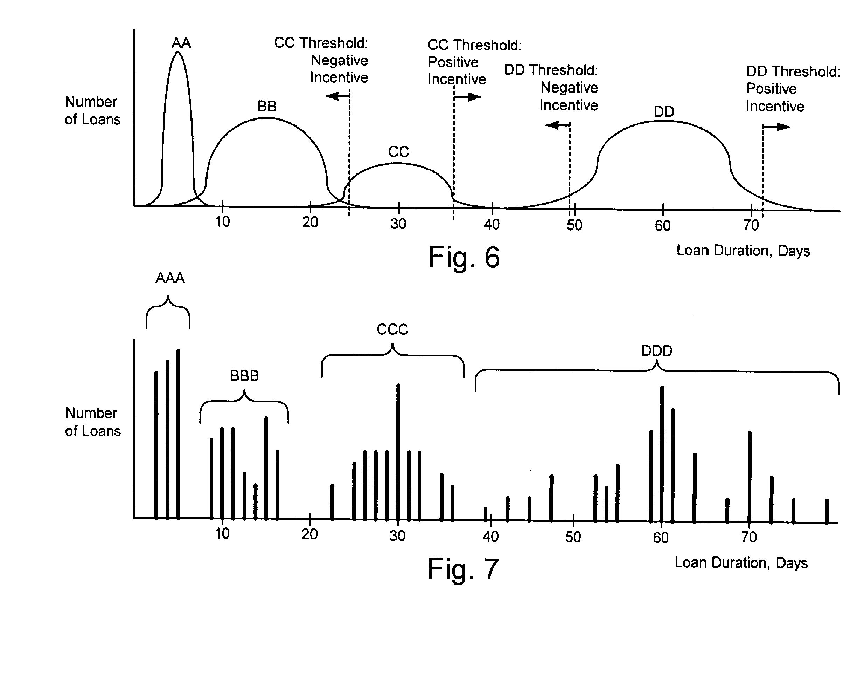

Fig. 6 is a chart showing hypothetical loan duration profiles for four different market participants where the term of the loan was ended by the participant. The abscissa (X-axis) is loan duration in days; the ordinate (Y-axis) is how many loans have the specified duration. Curve AA shows a high frequency trader, such as a hedge fund executing automated programs resulting in frequent buys and sells. As shown, curve AA has an average loan duration of 5 days. Curve BB shows a broker lending stock from its own inventory (from its own account or held on behalf of retail customers), the loans having an average duration of 15 days. Curve CC shows a so-called long-short trader, such as a hedge fund, having an average loan duration of 30 days. Curve DD shows a pension fund that can readily accommodate long duration loans, shown as having an average of 60 days.

Generally, the parties represented by curves BB and DD should use primary market 210, while the parties represented by curves AA and CC should use secondary market 220.

For curve DD, bad behavior is represented by short duration loans, the leftmost tail of the curve. The cutoff is set as, for example, the number of days that is two standard deviations from the average length ($\mu - 2\sigma$), or the number of days such that 5% of the loans are shorter than that number, or any other suitable threshold.

For curve DD, good behavior is represented by long duration loans, the rightmost tail of the curve. The cutoff is set as, for example, the number of days that is two standard deviations from the average length ($\mu + 2\sigma$), or the number of days such that 5% of the loans are longer than that number, or any other suitable threshold.

Good and bad behavior are defined similarly for each of curves AA, BB and CC.

Although Fig. 6 assesses the number of loans, in other embodiments, instead, the value of the loans is assessed, or the number of shares loan. Generally, the profiles are computed for each security over a moving window of time, with the window varying by security, that is, thinly traded stocks have a longer window such as one month, while actively traded stocks have a shorter window such as one week.

Fig. 7 is a chart showing daily activity for four hypothetical market participants. Curve AAA shows that its market participant terminated, for instance, 7 loans after 4 days, 9 loans after 5 days and 11 loans after 5 days. Comparing curve AAA in Fig. 7 with curve AA in Fig. 6, it is seen that the activity represented by curve AAA is "normal" for curve AA, and so market participant AAA will not get incentives.

Comparing curve BBB in Fig. 7 with curve BB in Fig. 6, it is seen that the activity represented by curve BBB is "normal" for curve BB, and so market participant BBB will not get incentives.

Comparing curve CCC in Fig. 7 with curve CC in Fig. 6, it is seen that the activity represented by curve CCC shows an undesirably short loan of duration about 23 days, and some desirably long loans of duration about 35 and 36 days. Market participant CCC should get a negative incentive and two positive incentives.

Comparing curve DDD in Fig. 7 with curve DD in Fig. 6, it is seen that the activity represented by curve DDD shows some undesirably short loans of duration under 50 days, and some desirably long loans of duration over 70 days. Market participant DDD should get negative incentives and positive incentives.

Operation of the incentives in ELMS 200 will now be discussed in detail.

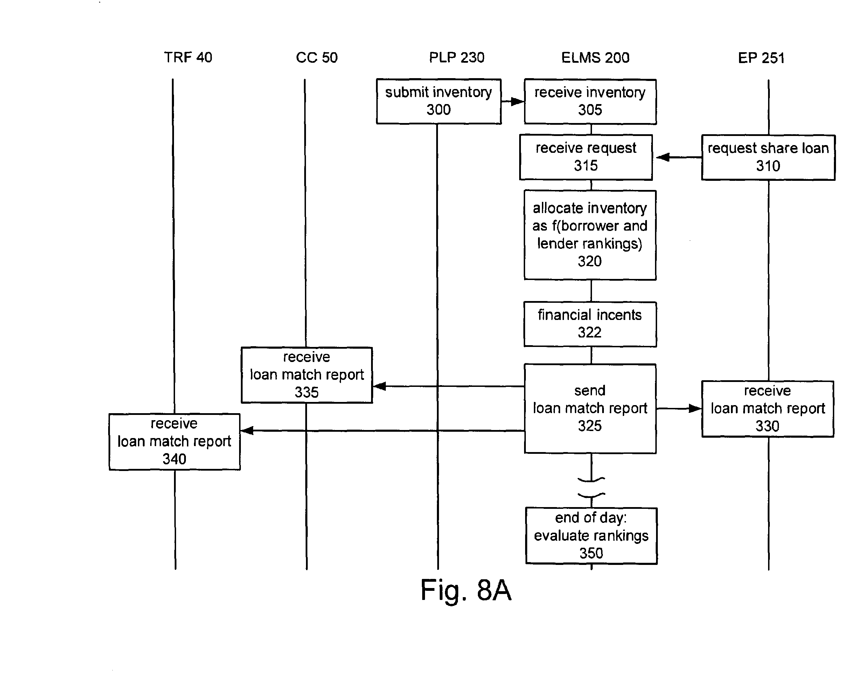

Figs. 8A-8C are a flowchart showing automated establishment of a securities loan.

At step 300, PLP 230 submits its stock inventory available for lending to ELMS 200. At step 305, ELMS 305 receives the stock inventory and stores it in a data file.

At step 310, EP 251 request a stock loan from ELMS 200. At step 315, ELMS 200 receives the loan request, and checks its data files for available inventory. In this case, ELMS 200 finds the inventory from PLP 230 that is in the correct stock and of sufficient quantity to support the requested loan, and determines that no other lenders have suitable inventory.

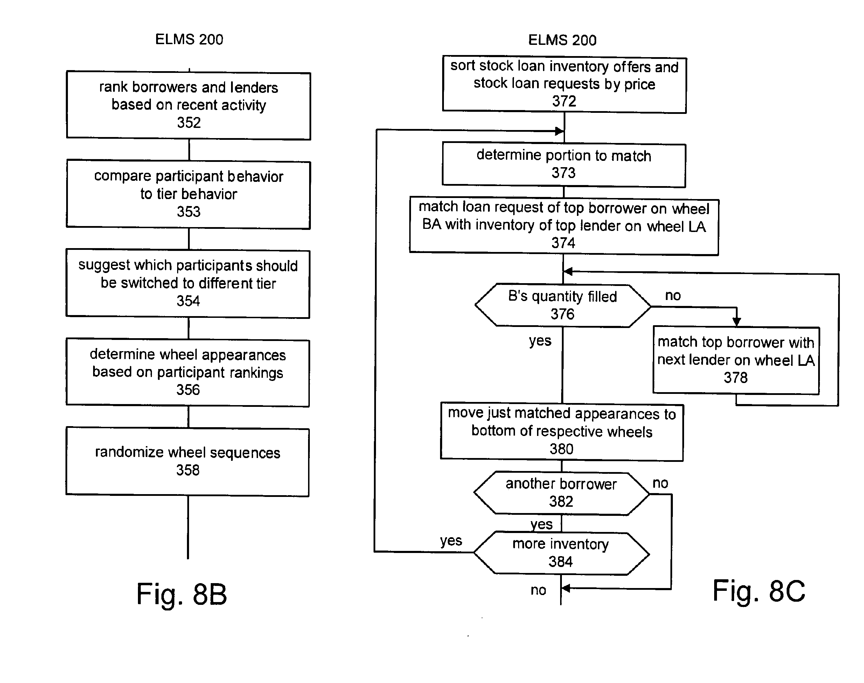

At step 320, ELMS 200 allocates the inventory to EP 251, discussed in detail with regard to Fig. 8C.

At step 322, ELMS 200 decides whether to assign positive or negative financial incentives to the borrowers and lenders participating in the stock loan match. Generally, if incentives are earned relative to the auction match, the incentives are positive, as it is desirable to encourage match activity. An example of a positive financial incentive is a rebate on marketplace fees imposed by ELMS 200.

At step 325, ELMS 200 sends a loan match report for the allocated inventory to EP 251, trade reporting facility 40 and clearing corporation 50. At step 330, EP 251 receives the loan match report for its requested loan. At step 335, clearing corporation 50 receives the loan match report. At step 340, trade reporting facility 40 receives the loan match report.

In other cases, inventory from multiple lenders can be used to fulfill the stock loan request.

In other embodiments, instead of lenders, such as PLP 230, providing an inventory list at the start of the day, the lenders register as wanting to be advised when there is a loan request within a specified quantity range for various symbols. ELMS 200 then broadcasts the loan request to registered lenders. ELMS 200 selects interested lenders according to a procedure, such as waiting a predetermined time for indications from lenders, then selecting the lender of best rank at the best price.

At the end of the day, at step 350, ELMS 200 collects activity information for all market participants and updates their respective rankings with their category, discussed in detail with regard to Fig. 8B. ELMS 200 also flags participants whose category should be altered, to human analysts. In this embodiment, a lender's behavior can indicate it should be changed from CLP status to PLP status, or from PLP status to CLP status; in other embodiments, different alterations occur such as changing permissions and privileges in ELMS 200 for the lender. Or, the behavior could result in access privileges being changed from primary to secondary access.

Fig. 8B provides detail for step 350 of Fig. 8A.

At step 352, market participants, i.e., borrowers and lenders, are rated based on recent activity, as discussed above. The outcome is a ranking or rating for each participant, such as "good", "normal" or "poor".

At step 353, ELMS 200 compares the participant's behavior relative to "tier-normal" behavior. As used herein and in the claims, "tier-normal" refers to behavior that is appropriate for the tier, based on the actual behavior of other participants in the tier and/or a hypothetical profile for the tier. Fig. 6 shows hypothetical profiles for different participants in different tiers. When a behavior is within the positive and negative thresholds, it is normal for the tier.

At step 354, ELMS 200 produces a report suggesting which participants, if any, should be changed to access a different market tier. Participants below the negative threshold for tier-normal behavior are candidates for a lower tier. Participants above the positive threshold for tier-normal behavior are candidates for a higher tier. In the present embodiment, this decision is made by a human; in other embodiments, the decision is made by ELMS 200, using a decision criterion such as how long the participant has maintained a ranking of poor, or other suitable criterion.

As used herein and in the claims, a "participant wheel" is an ordered sequence used in assigning specific events to market participants as a function of their behavior. In this embodiment, there are four wheels: wheel LA is used to assign new stock loans to lenders in a loan auction, wheel BA is used to assign new stock loans to borrowers in a loan auction, wheel LR is used to assign stock returns to lenders, and wheel BR is used to assign stock recalls to borrowers. In other embodiments, other wheels may be used.

Generally, a wheel is associated with a wheel formula, specifying the number of appearances in the ordered sequence that a participant earns in accordance with the participant's rank. For example, a rank of "good" earns three appearances, a rank of "normal" earns two appearances, and a rank of "poor" earns one appearance.

At step 356, ELMS 200 determines the wheel appearances based on the participant rankings.

At step 358, ELMS 200 places the appearances into an ordered sequence. In this embodiment, a pseudo-random sequence of numbers corresponding to the number of appearances is generated, and then the appearances are ordered according to the pseudo-random sequence.

An example of wheel construction will now be discussed.

Assume that the participants for ELMS 200 are lenders L1, L2, L3 and borrowers B1, B2, B3, B4 having ranks, determined as above, shown in Table 3.

TABLE 3

| lender participant | rank | borrower participant | rank |
|---|---|---|---|
| L1 | good | B1 | good |
| L2 | normal | B2 | normal |
| L3 | normal | B3 | normal |
|  |  | B4 | poor |

Further assume that the formulas for the auction wheels and recall and return wheels are as shown in Table 4. Note that for wheel BR, a rank of "good" corresponds to zero appearances, that is, a borrower participant with a rank of good will never experience a stock loan recall. In other embodiments, other formulas are used.

TABLE 4

| wheel LA | | wheel LR | | wheel BA | | wheel BR | |
|---|---|---|---|---|---|---|---|
| rank | appears | rank | appears | rank | appears | rank | appears |
| good | 3 | good | 1 | good | 3 | good | 0 |

(continued)

| wheel LA | | wheel LR | | wheel BA | | wheel BR | |
|---|---|---|---|---|---|---|---|
| normal | 2 | normal | 3 | normal | 2 | normal | 1 |
| bad | 1 | bad | 5 | bad | 1 | bad | 3 |

For wheel LA, L1 has a rank of good and thus three appearances, denoted as L1a, L1b and L1c. Table 5 shows the appearances in each wheel.

TABLE 5

| no. appears | wheel LA | wheel LR | wheel BA | wheel BR |
|---|---|---|---|---|
| | L1a, L1b, L1c | L1a | B1a, B1b, B1c | |
| | L2a, L2b | L2a, L2b, L2c | B2a, B2b | B2a |
| | L3a, L3b | L3a, L3b, L3c | B3a, B3b | B3a |
| | | | B4a | B4a, B4b, B4c |
| total | 7 | 7 | 8 | 5 |

Wheel LA has seven appearances. ELMS 200 places the numbers one through six in pseudo-random order, for example: 3462715. Similarly, wheel LR has seven appearances, and ELMS 200 generates the following pseudo-random sequence: 7143256; for wheel BA, the sequence is 27361458, and for wheel BR, the sequence is: 41352.

Finally, ELMS 200 orders the appearances in accordance with the pseudo-random sequence, as shown in Table 6. For example, wheel BR is initially populated with five entries (B2a B3a B4a B4b B4c), corresponding to a 1/5 chance of being chosen for each of participants B2 and B3, and a 3/5 chance of being chosen for participant B4. Consider entries (B2a B3a B4a B4b B4c) as having the sequence (1 2 3 4 5). Now, the sequence digits are pseudo-randomly arranged into the order 41352, corresponding to the sequence B4b B2a B4a B4c B3a.

TABLE 6

| wheel | pseudo-random no. | (original sequence that populates the wheel) ordered sequence of participant appearances |
|---|---|---|
| LA | 3462715 | (L1a L1b L1c L2a L2b L3a L3b) L1c L2a L3a L1b L3b L1a L2b |
| LR | 7143256 | (L1a L2a L2b L2c L3a L3b L3c) L3c L1a L2c L2b L2a L3a L3b |
| BA | 27361458 | (B1a B1b B1c B2a B2b B3a B3b B4a) B1b B3b B1c B3a B1a B2a B2b B4a |
| BR | 41352 | (B2a B3a B4a B4b B4c) B4b B2a B4a B4c B3a |

Examples using the wheels are provided below.

At step 372, ELMS 200 sorts the stock loan inventory offers and stock loan requests by security and price, grouping together all offers and requests for a particular stock at a particular price.

At step 373, ELMS 200 determines how much to match. In the present embodiment, the full amount of each borrower's request can be matched to one lender's inventory offer. In other embodiments, constraints are applied, such as (i) a maximum of 50% of a lender's inventory offer can be matched to one borrower, (ii) the portion of a lender's inventory that can be matched to one borrower is limited to three times the lender's inventory offer divided by the total inventory being offered by all lenders, (iii) borrower requests are divided into sub-requests each having a maximum of 20,000 shares, and so on. The constraints exist to protect the exposure of borrowers and lenders, and to ensure many transactions so that the probability of loan matches more closely tracks what is expected from the wheel.

At step 374, for each stock and price grouping, ELMS 200 takes the top borrower from wheel BA and the top lender from wheel LA, and attempts to match the borrower's request with the lender's inventory. If the lender's inventory amount is greater than or equal to the borrower's request, then there is a full match. If the inventory is less than the request, then there is a partial match.

At step 376, ELMS 200 determines whether the borrower's request is fully matched. If so, processing continues at step 380. If not, at step 378, ELMS 200 takes the next lender from wheel LA, and attempts to match the borrower's request with the lender's inventory. If the lender's inventory amount is greater than or equal to the borrower's request, then there is a full match. If the inventory is less than the request, then there is a partial match. Processing returns to step 376.

At step 380, the borrower's stock loan request has been fully filled by matching to lender's inventory. The appearances, taken from the wheels, used in the match are moved to the bottom of the respective wheels. Eventually, as more auctions occur, these appearances will rise to the top and again experience matches.

At step 382, ELMS 200 determines whether there is another borrower in the auction by taking the next top ranked borrower on wheel BA. If not , processing is complete. If so, at step 384, ELMS 200 determines whether there are more lenders with suitable inventory; if so, processing returns to step 374. If not, processing is complete.

An example of an auction match using the wheels LA and BA is now discussed.

Assume that after step 372, ELMS 200 has created a grouping for stock XYZ at loan price 2% as follows: Lender L1 - 100,000 shares, Lender L2 - 50,000 shares, Borrower B2 - 10,000 shares, Borrower B3 - 20,000 shares. That is, Lender L1 is offering to lend 100,000 shares of XYZ at a loan price of FF-2%, Borrower B2 is requesting a stock loan of 10,000 shares of XYZ at a loan price of FF-2%, and so on.

At step 374, ELMS 200 takes the top borrower from wheel BA and the top lender from wheel LA, and attempts to match the borrower's request with the lender's inventory. The top borrower on wheel BA corresponds to the first appearance on wheel BA, namely, "B1b" as shown in Table 6. This is an appearance for borrower B1.

However, borrower B1 is not part of the grouping for this auction, so ELMS 200 continues to the next appearance on wheel BA, namely, "B3b" as shown in Table 6. This is an appearance for borrower B3 who is part of the grouping for this auction. So, ELMS 200 will now determine who provides the inventory for borrower B3's loan request of 20,000 shares.

ELMS 200 reads wheel LA and obtains "L1c" as shown in Table 6. This is an appearance for lender L1, who is part of the grouping for this auction, and is offering 100,000 shares for loan. ELMS 200 matches B3's request for 20,000 shares against L1's inventory to create a stock loan of 20,000 shares of XYZ at a rate of FF - 2%.

At step 376, ELMS 200 determines that B3's request is fully matched.

At step 380, ELMS 200 moves the appearances that participated in the match to the bottom of the wheel, so that the new sequence is as shown in Table 7.

TABLE 7

| wheel | pseudo-random no. | ordered sequence of participant appearances |
|---|---|---|
| LA | 3462715 | (**L1c** L2a L3a L1b L3b L1a L2b)<br>L2a L3a L1b L3b L1a L2b **L1c** |
| BA | 27361458 | (B1b **B3b** B1c B3a B1a B2a B2b B4a)<br>B1b B1c B3a B1a B2a B2b B4a **B3b** |

At step 382, ELMS 200 determines that there is another borrower in this auction, namely, borrower B2 wanting a stock loan of 10,000 shares of XYZ. There are no other remaining borrowers, so B2 is selected by obtaining its topmost appearance on wheel BA, namely "B2a" from Table 7.

At step 384, ELMS 200 determines that there are more lenders with suitable inventory, namely, L1 with 100,000 - 20,000 = 80,000 shares, and L2 with 50,000 shares, so processing returns to step 374.

At step 374, ELMS 200 reads wheel LA and obtains "L2a" as shown in Table 7. This is an appearance for lender L2, who is part of the grouping for this auction, and is offering 50,000 shares for loan. ELMS 200 matches B2's request for 10,000 shares against L2's inventory to create a stock loan of 10,000 shares of XYZ at a rate of FF - 2%.

At step 376, ELMS 200 determines that B2's request is fully matched.

At step 380, ELMS 200 moves the appearances that participated in the match to the bottom of the wheel, so that the new sequence is as shown in Table 8.

TABLE 8

| wheel | pseudo-random no. | ordered sequence of participant appearances |
|---|---|---|
| LA | n/a | (**L2a** L3a L1b L3b L1a L2b L1c)<br>L3a L1b L3b L1a L2b L1c **L2a** |

(continued)

| wheel | pseudo-random no. | ordered sequence of participant appearances |
|-------|-------------------|---------------------------------------------|
| BA | n/a | (B1b B1c B3a B1a **B2a** B2b B4a B3b)<br>B1b B1c B3a B1a B2b B4a B3b **B2a** |

In this example, all loan requests were fully matched. However, in other examples, there might not be enough inventory to satisfy all the loan requests, so borrowers with high ranks would be more likely to get matches, whereas borrowers with low ranks would be less likely to get matches.

As will be appreciated, lenders and borrowers with high ranks have better chances of participating in auctions due to their increased number of appearances on the wheels LA and BA.

In this embodiment, financial incentives are not part of an auction match. However, in other embodiments, financial incentives are provided. In one embodiment, hard to find securities can earn incentives for lenders who provide them. In another embodiment, borrowers who request loans greater than a threshold (number of shares or value of loans) can earn incentives, generally corresponding to the prior art practice of paying for order flow. The incentives may be reductions in transactional usage fees for ELMS 200 or other suitable type of incentive.

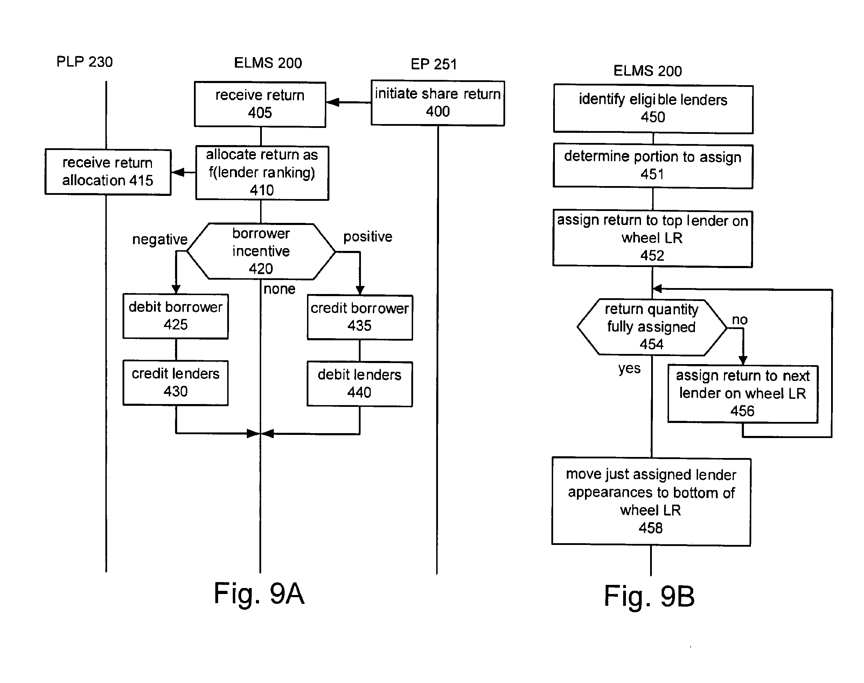

Figs. 9A-9B are a flowchart showing automated incentives for a borrower.

At step 400, EP 251 initiates a share return. At step 405, ELMS 200 receives the share return.

At step 410, ELMS 200 allocates the share return to a lender, discussed below with regard to Fig. 9B. At step 415, PLP 230 receives the share return allocation.

Since the share return is based on the ranking, this demonstrates why lenders have an incentive to have a good ranking.

At step 420, ELMS 200 determines whether EP 251 should be financially incentivized for this return activity. In the case of a return, in some embodiments, a borrower can earn positive financial incentives for providing a too-early return of hard-to-borrow stock, relative to the borrower's profile, or for providing a return after holding a stock loan for an extremely long period. In some embodiments, such as a marketplace for term loans, a borrower can earn negative incentives for providing a too-early return of stock.

The negative financial incentive is the difference between the rates in primary market 210 and secondary market 220, the difference being defined as "economic neutrality", plus a marginal incentive, to encourage borrowers to choose the correct market when the loan is initiated, or discourage borrowers from choosing the wrong market.

$$Incentive = \sum_{days\ of\ Loan} LoanValue * (SecondaryRate + MargIncentiveRate - PrimaryRate)/365$$

Generally, the loan rates are based on the Federal Funds (FF) rate modified by a particular number of basis points (BP) with one basis point = 0.01%. Assuming a current FF rate = 2%, then, for example,

$$PrimaryRate = FF - 100\ BP = 2\% - 100\ BP = 1\%$$

$$SecondaryRate = FF - 50\ BP = 2\% - 50\ BP = 1.5\%$$

$$MargIncentiveRate = 5\ BP$$

Thus, the daily loan value is multiplied by (1.5% + 5BP - 1%) = 0.55% times the number of days outstanding divided by 365 .

The incentive must be assessed separately for each loan terminated because stability varies by security.

The incentive may be a different amount for each type of activity. For example, stock returns that are after only a small number of days may have a negative incentive of 5 BP, while stock recalls may have a negative incentive of 10 BP. The incentive may itself be a function of other parameters. For example, the parameter may be the number of days less than a negative threshold for a profile.

ELMS 200 assesses stability as a percentile position within the loan distribution for similar securities, and compares the assessed position to a predetermined threshold, as described below.

The number of days is assessed relative to the typical behavior for that market (primary or secondary) and that security. For example, assume that for the security XYZ, and calculated over all loan participants, for loan terminations initiated by the borrower, the average loan length is 6 days ($\mu = 6$) and the standard deviation is 1 day ($\sigma = 1$) (see Fig. 6 curve AA), and a negative incentive is earned if the loan is terminated sooner than two standard deviations from the average, i.e., the negative incentive (left side of the curve in Fig. 6) is for loan terminations of length $\mu - 2\sigma = 6 - 2*1 = 4$ days or shorter. A positive incentive (right side of the curve in Fig. 6) is due if the loan is terminated after two standard deviations from the average, i.e., the reward is for loan terminations of length $\mu + 2\sigma = 6 + 2*1 = 8$ days or longer. Loans terminations in the range of ($\mu - 2\sigma$) to ($\mu + 2\sigma$) days, i.e., 4-8 days, are normal and incur no incentive.

So, if a loan is terminated after 3 days, then for each of the three days, the loan incurs a negative incentive of the loan value times 0.55%/365 * number of days outstanding, in addition to the economic neutrality amount (see formula above).

If, at step 420, it is determined that a financial incentive is not warranted, then processing is complete.

If, at step 420, it is determined that a negative financial incentive is warranted, then at step 425, the borrower is debited by the disincentive amount. At step 430, the lender is credited by the disincentive amount. In some embodiments, step 430 is omitted and the funds are used according to a procedure beyond the scope of this document.

If, at step 420, it is determined that a positive financial incentive is warranted, then at step 435, the borrower is credited by the incentive amount. At step 440, the lender is debited by the incentive amount. In some embodiments, step 440 is omitted.

Fig. 9B provides detail for step 410 of Fig. 9A.

At step 450, ELMS 200 identifies lenders who are eligible to accept a stock return, that is, lenders having outstanding loans of the stock symbol being returned at the same rate as the stock being returned.

At step 451, ELMS 200 determines the portion to assign, in a manner similar to that discussed with respect to step 373 of Fig. 8C.

At step 452, ELMS 200 assigns the return to the top lender appearance on wheel LR that is eligible.

At step 454, ELMS 200 determines whether the stock return has been fully assigned. If not, then at step 456, ELMS 200 gets the next eligible lender appearance from wheel LR and assigns the return, and processing returns to step 454.

At step 458, ELMS 200 moves the just assigned lender appearances to the bottom of wheel LR.

Partial returns are processed similarly.

An example of a stock return using the wheel LR is now discussed.

Assume that borrower B4 returns 10,000 shares of XYZ.

At step 450, ELMS 200 identifies lenders L2 and L3 as eligible to accept an XYZ stock return as each of them have loaned 100,000 shares of XYZ stock through ELMS 200. Here, lender L1 is ineligible as it never offered shares of XYZ for a stock loan through ELMS 200.

At step 452, ELMS 200 assigns the return to the top lender appearance on wheel LR that is eligible. As seen in Table 6, wheel LR has a sequence of: L3c L1a L2c L2b L2a L3a L3b.
The first appearance is L3c, corresponding to lender L3 who is eligible, so the 10,000 share return from borrower B4 is assigned to lender L3.

At step 454, ELMS 200 determines that the stock return has been fully assigned.

At step 458, ELMS 200 moves the just assigned lender appearance to the bottom of wheel LR. Table 9 shows the adjusted wheel LR.

TABLE 9

| wheel | pseudo-random no. | ordered sequence of participant appearances |
|---|---|---|
| LR | 7143256 | (**L3c** L1a L2c L2b L2a L3a L3b)<br>L1a L2c L2b L2a L3a L3b **L3c** |

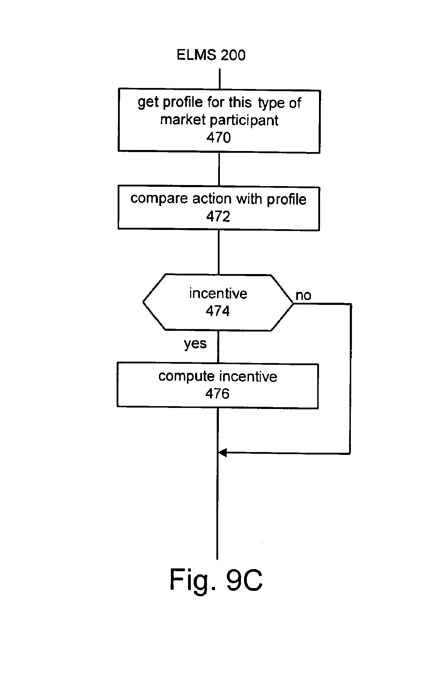

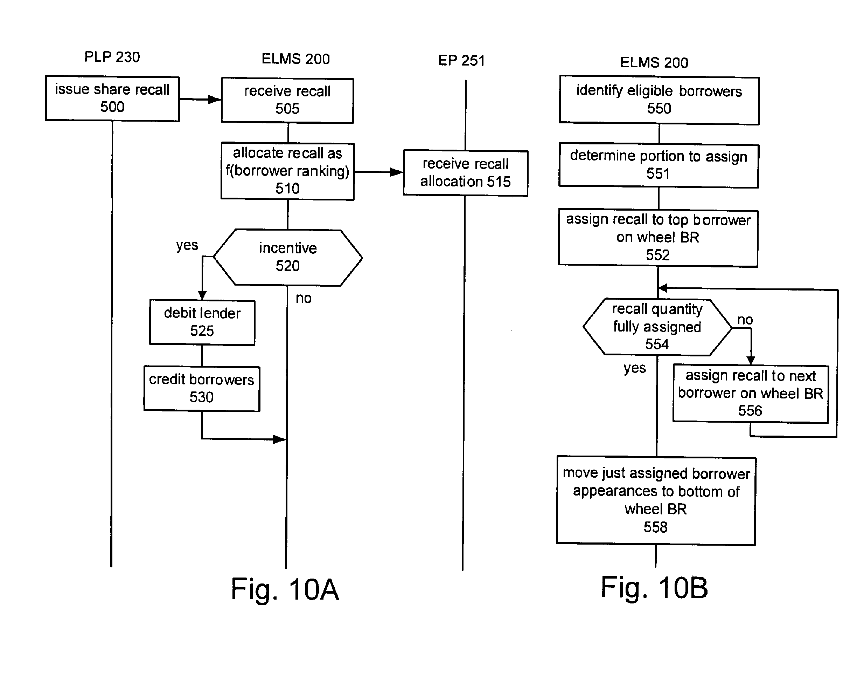

Fig. 9C provides detail for step 420 of Fig. 9A and step 520 of Fig. 10A.

At step 470, ELMS 200 gets the profile for this type of market participant in this tier.

At step 472, ELMS 200 compares the action with the profile to determine if the action is outside tier-normal behavior, that is, below the negative threshold or above the positive threshold. In some embodiments, negative incentives for early returns are not implemented as a matter of marketplace policy.

At step 474, ELMS 200 determines whether to provide an incentive. If the action is inside tier-normal behavior, then no incentive is provided and processing is complete.

If the action is outside tier-normal behavior, then at step 476, ELMS 200 computes a financial incentive.

An example of allocating a financial incentive is now discussed.

In this example, borrower CLP 241 returns 10,000 shares of XYZ having a price of $6 per share after two days. Assume incentive rates as set forth above in the discussion of Fig. 7.

At step 470, ELMS 200 gets profile BB of Fig. 6 as the proper profile, with a negative threshold set at seven days.

At step 472, ELMS 200 compares the action, a share return after two days, with the profile, having a negative threshold of seven days, to determine that the action is outside tier-normal behavior, that is, the share return was made abnormally soon after the stock loan was established.

At step 474, ELMS 200 determines whether to provide an incentive. Since the action is outside tier-normal behavior, the determination is positive.

At step 476, ELMS 200 computes a financial incentive. In this example,

$$Incentive = \sum LoanValue * (SecondaryRate + MargIncentiveRate - PrimaryRate)/365 ,$$

summed over the number of days that the loan is outstanding

$$Incentive = (2 \text{ days}) * (10{,}000 \text{ shares}) * (\$6 \text{ per share}) * (0.55\%)/365$$

$$Incentive = \$183$$

At step 425 of Fig. 9A, the borrower is debited by $183.

Figs. 10A-10B are a flowchart showing automated incentives for a lender.

At step 500, PLP 230 initiates a share recall. At step 505, ELMS 200 receives the share recall.

At step 510, ELMS 200 allocates the share recall to a borrower, discussed below with regard to Fig. 10B. At step 515, EP 251 receives the share recall allocation. Since the share recall allocation is based on the ranking, this demonstrates why borrowers have an incentive to have a good ranking.

At step 520, ELMS 200 determines whether PLP 230 should be financially incentivized for this recall activity. In the case of a recall, a lender can earn only negative financial incentives for providing a too-early recall.

If, at step 520, it is determined that a financial incentive is not warranted, then processing is complete.

If, at step 520, it is determined that a negative financial incentive is warranted, then at step 525, the lender is debited by the disincentive amount, which may be calculated as a daily interest rate times shares recalled for a number of days that would make the recall be after a suitably long period, or the disincentive may be calculated according to another suitable procedure. At step 530, the borrower is credited by the disincentive amount. In some embodiments, step 530 is omitted and the funds are used according to a procedure beyond the scope of this document.

Fig. 10B provides detail for step 510 of Fig. 10A.

At step 550, ELMS 200 identifies borrowers who are eligible to accept a stock recall, that is, borrowers having loans of the stock symbol being recalled.

At step 551, ELMS 200 determines the portion to assign, in a manner similar to that discussed with respect to step 373 of Fig. 8C.

At step 552, ELMS 200 assigns the recall to the top borrower appearance on wheel BR that is eligible.

At step 554, ELMS 200 determines whether the stock recall has been fully assigned. If not, then at step 556, ELMS 200 gets the next eligible borrower appearance from wheel BR and assigns the recall, and processing returns to step 454.

At step 558, ELMS 200 moves the just assigned borrower appearances to the bottom of wheel BR.

Partial recalls are processed similarly.

An example of a stock recall using the wheel BR is now discussed.

Assume that lender L2 recalls 10,000 shares of XYZ.

At step 550, ELMS 200 identifies borrowers B1, B2, B4 as eligible to accept an XYZ stock recall as each of them has a stock loan of 5,000 shares of XYZ stock at the appropriate rate obtained through ELMS 200. Here, borrower B3 is ineligible as it is not borrowing shares of XYZ through ELMS 200.

At step 552, ELMS 200 assigns the return to the top borrower appearance on wheel BR that is eligible. As seen in Table 6, wheel BR has a sequence of: B4b B2a B4a B4c B3a. The first appearance is B4b, corresponding to borrower B4 who is eligible, so the 10,000 share recall from lender L2 is assigned to borrower B4.

At step 554, ELMS 200 determines that the stock return has not been fully assigned, since borrower B4 could accept a recall of only 5,000 shares, the maximum it has borrowed. So, at step 556, ELMS 200 gets the next appearance on wheel BR, namely, "B2a" corresponding to borrower B2 who is eligible. ELMS 200 assigns the remaining 10,000 - 5,000 = 5,000 shares to borrower B2.

At step 554, ELMS 200 determines that the stock return has been fully assigned.

At step 558, ELMS 200 moves the just assigned borrower appearances to the bottom of wheel BR. Table 10 shows the adjusted wheel BR.

TABLE 10

| wheel | pseudo-random no. | ordered sequence of participant appearances |
|-------|-------------------|---------------------------------------------|
| BR | 41352 | (**B4b B2a** B4a B4c B3a)<br>B4a B4c B3a **B4b B2a** |

As used herein and in the claims, a trade refers to matching stock inventory with a request for a loan of that stock. Thus, in the context of securities lending, a trade is a shortcut way of referring to forming a loan.

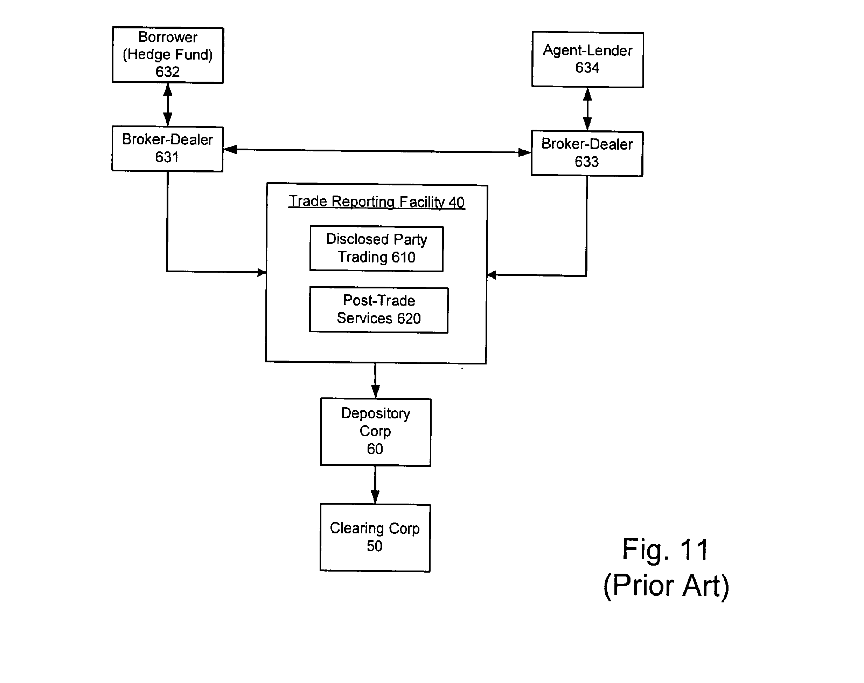

Fig. 11 depicts conventional formation of a stock loan.

A conventional stock loan involves four parties. On the borrow side, there are borrower 632, such as a hedge fund, and broker-dealer 631 who represents borrower 632. On the lender side, there are lender 634, such as a custodian bank for a pension fund, and broker-dealer 633 who represents lender 634. Broker-dealers 631, 633 have a network of bilateral relationships, and typically trade with only a few other broker-dealers that they trust. Sometimes, a broker-dealer can fulfill its client's request to borrow or lend from its own inventory, and so another broker-dealer is not necessary.

Hedge fund 632 borrows from broker-dealer 631 at a first rate. Broker-dealer 631 borrows, at a second rate, from its own inventory or another broker-dealer's inventory. The difference in borrowing rates, referred to as the spread, represents profit for broker-dealer 631.

Broker-dealers communicate with each other through a variety of means, such as telephone, instant messaging, email, and so on, as is convenient for any particular pair of broker-dealers.

Trade reporting facility 40 was created so that a broker-dealer participating in a trade could have a system to report the trade to, as opposed to recording it on a piece of paper. Over time, capabilities of trade reporting facility 40 have expanded. Examples of trade reporting facility 40 include the EquiLend system offered by EquiLend Holdings LLC, www.equilend.com, the Loanet system from Sunguard is also similar, www.sunguard.com/loanet/, and the Pirum system from Pirum Systems Limited, www.pirum.com, and other services exist. Some external services allow broker-dealers having stock inventory to list the inventory with the external service. Some external services provide a service that enables a borrower to enter what the borrower wishes to borrow along with a list of broker-dealers to advise; then the service shows the borrower's need to the first broker-dealer on the list for a predetermined period of time such as 15 minutes, and if the need is unfulfilled after 15 minutes, then to the second broker-dealer on the list for 15 minutes, and so on through the list, one by one, until the need is filled or the list is exhausted. Some external services provide an instant messaging interface so that broker-dealers can conveniently negotiate loans with each other.

Trade reporting facility 40 does not automatically match borrowers and lenders. Some instances of trade reporting facility 40 enable participants to see needs, that is, offers to borrow, and to post inventory, that is, offers to lend, and then manually select offers thereby forming a trade.

After the trade (stock loan) is formed via a mostly manual process of broker-dealers finding each other, each broker-dealer must report its side of the trade obligations to depository corp. 60, a settlement entity. Broker-dealers are members of depository corp. 60, while borrower 632 and lender 634 are not members of depository corp. 60 and thus cannot trade directly with each other as they have no mechanism for exchanging cash and shares. Some broker-dealers have their own in-house systems that report trades to depository corp. 60. Some instances of trade reporting facility 40 report trades to depository corp. 60 on behalf of broker-dealers who subscribe to their trade reporting service. Depository corp. 60 maintains accounts for its members, and transfers shares and cash collateral in accordance with trade reports submitted by or on behalf of its members.

While a stock loan exists, daily processing is needed to ensure that the collateral is marked-to-market, that is, keeps up with changes in the value of the underlying stock, and to reflect corporate actions affecting the stock price such as dividends, splits, mergers and so on. This daily processing is performed by some broker-dealers via in-house systems, while others use trade reporting facility 40 for daily processing of outstanding stock loans.

A "Hedge Program" offered by clearing corp. 50, available to members of clearing corp. 50, who are generally the same broker-dealers who are members of depository corp. 60, provides a guarantee for the post-settlement mark-to-market of stock loans. Post-settlement refers to after the stock and collateral have been transferred between the trading partners.

Fig. 11 shows processing when trade reporting facility 40 and the Hedge Program of clearing corp. 50 are used. Disclosed party trading 610 represents the services that trade reporting facility 40 offers to help broker-dealers trade with each other. Post-trade services 620 represents the optional services of trade reporting to depository corp. 60 and daily processing for outstanding stock loans.

Trade reporting facility 40 does not automatically match trades. All trading is between named parties, that is, there is no anonymous trading. The end-users, hedge fund 632 and agent lender 634, cannot trade via trade reporting facility 40 directly, rather, they must go through their respective broker-dealers. Clearing corp. 50 guarantees only the post-settlement mark-to-market of stock loans and only for participants in its Hedge Program.

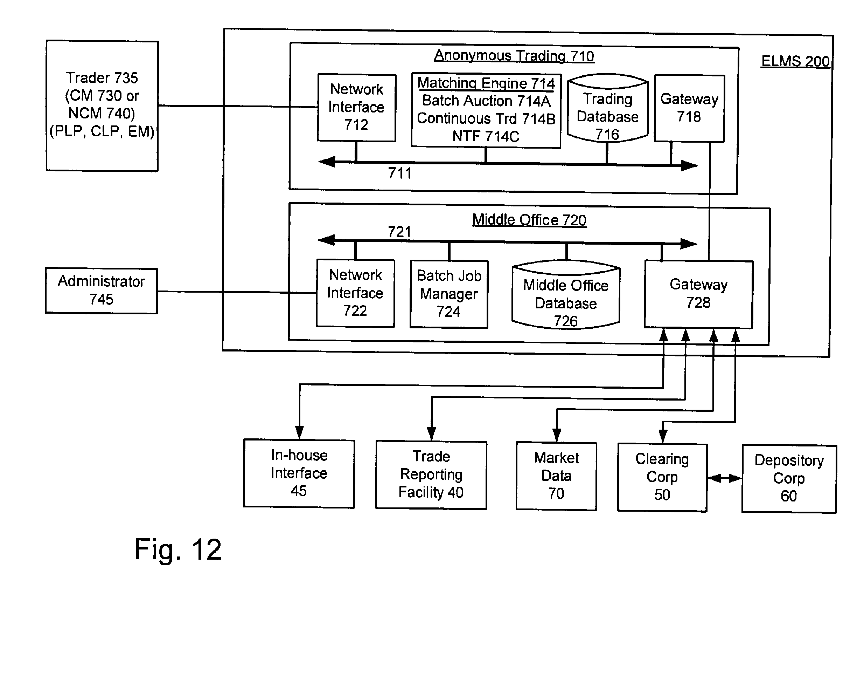

Fig. 12 is a block diagram showing an implementation of electronic loan market system (ELMS) 200. ELMS 200 provides greater transparency and enhanced price discovery to the stock loan market, and reduces systemic risk.

Trader 435 is one of PLP 230, CLP 240, CLP 241, EP 250 and EP 251, and has the status of a clearing member (CM) or a non-clearing member (NCM) affiliated with a CM. A trader can trade for a trading account.

A CM can monitor, on a real-time basis, the activities of NCMs that it sponsors. A CM can supervise its NCMs by some or all of the following: (1) setting and modifying gross and net credit limits, (2) adding and removing restrictions for entering and modifying orders, (3) approving trading activity on a trade-by-trade basis, and (4) entering position limits to govern pre-approved trading for their NCMs.

Administrator 745 is an administrative employee of a CM or a NCM, that is, administrator 745 is not a trader. A NCM administrator can set credit limits for particular traders, set passwords, and assign roles for other users within the NCM's organization. A CM administrator can perform the previously described functions for its CM traders, and can set credit limits for its NCMs, and can approve CM and NCM activity.

As used herein and in the claims, formation of a stock loan is synonymous with creating a stock loan trade, and is also synonymous with matching a borrower and lender to form a stock loan.

As used herein and in the claims, for purposes of a stock loan, a lender corresponds to a seller while a borrower corresponds to a buyer.

Although the capabilities of ELMS 200 are described with respect to stock loan, these capabilities are not limited to stock loans and may be used in other trading activity.

Anonymous trading module 710 may be implemented on a series of server computers sharing a common bus and database. In one embodiment, anonymous trading module 710 is a customized version of the Cinnober TRADExpress Platform, described at www.cinnober.com. Trading bus 711 is connected to network server 712, matching engine 714, trading database 716 and trading gateway 718. Network server 712 is coupled to parties wishing to borrow and lend stock, through any suitable communication network including public and private facilities. Matching engine 714 enables matching stock inventory with stock loan requests via batch auction module 714A, continuous trading module 714B and negotiated trade facility 714C. Trading gateway 718 is connected to middle office module 720.

Middle office module 720 may be implemented on a series of server computers sharing a common bus and database. Middle office bus 721 is connected to network server 722, batch job manager 724, middle office database 726 and middle office gateway 718. Network server 722 is coupled to administrators 745, through any suitable communication network including public and private facilities. Batch job manager 724 implements the post-trade functions discussed below. Middle office gateway 728 is connected to trading module 710, trade reporting facility 40, and to external services 45, market data 70, clearing corp. 50 and depository corp. 60 (via clearing corp. 50).

Middle office module 720 supports anonymous trading module 710 in carrying out the stock loan marketplace post-trade activities, receiving contracts formed by the continuous and batch auction processes described above, and is discussed further below. In one embodiment, middle office module 720 determines payments relating to rebates, mark-to-market of collateral, and payments relating to corporate actions such as dividends, and notifies clearing corp. 50 of its payment determinations. In another embodiment, clearing corp. 50 determines mark-to-market of collateral, and other payments.

Trade reporting facility 40 receives trade reports from ELMS 200, because some entities may be using ELMS 200 for only part of their trading activity, and wish to use trade reporting facility 40 to have a full record of all of their trading activity.

In-house interface 45 is adapted to report trading activity to in-house systems of CMs and NCMs for presentation to users of these in-house systems.

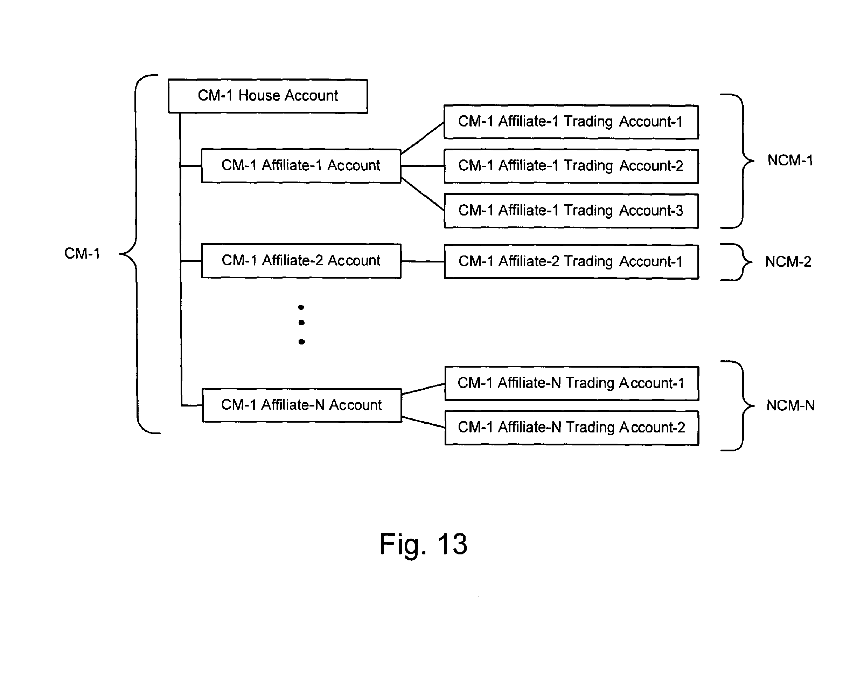

Fig. 13 is a diagram depicting the relationship between accounts for CMs and NCMs. Each CM has one or more house accounts for its own trades, and can also have affiliate accounts for NCMs, if any, that are affiliated with it. Each CM affiliate account is associated with one or more affiliated NCM trading accounts. Thus, a NCM may have multiple trading accounts. Although not shown in Fig. 2, a NCM may also be affiliated with multiple CMs. This replicates the present business situation in which a hedge fund, for example, has relationships with multiple broker-dealers.

A NCM must designate a sponsoring CM for each order submitted to ELMS 200.

As discussed below, a CM can participate in trades of its NCMs when the NCMs agree to the respective participation of their CMs. In one embodiment, automatic participation is available only for batch auction trades. In another embodiment, automatic participation is available only for batch auction trades and continuous trading. In a further embodiment, automatic participation is available for all three trading mechanisms: batch auction, continuous trading, and negotiated trading.

When trading module 710 sends a trade report involving an NCM to middle office module 720, trading module 710 appends the CM for the NCM to the trade report. Clearing corp. 50 generally ignores the NCM information. Clearing corp. 50 and depository corp. 60 use the account information for the CM on the trade.

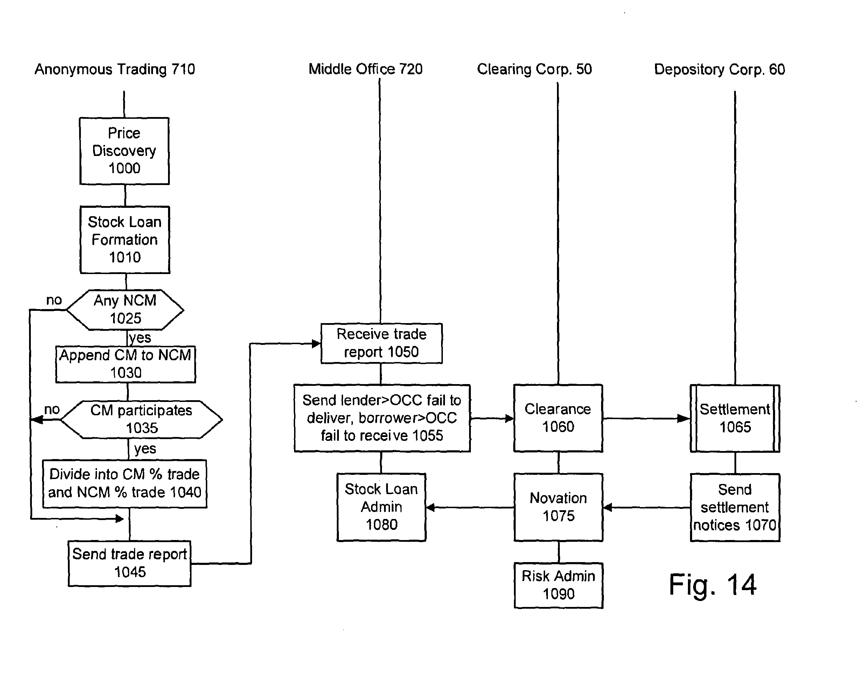

Fig. 14 is a flowchart showing the general steps involved in creating a stock loan.

At step 1000, price discovery occurs in matching engine 714 of anonymous trading module 710 of ELMS 200. The purpose of price discovery is to engage in a trade. Price discovery can occur in the following ways:

- in a batch auction, trader 735 submits a borrow offer or a lend offer to the batch auction. When the batch auction occurs, ELMS 200 automatically determines the equilibrium price for the auction so as to maximize the volume of securities traded; and
- for a negotiated auction, trader 735 uses ELMS 200 to anonymously find other traders who have relevant inventory, then performs a one-to-one confidential negotiation.

These two mechanisms, executing in matching engine 714, are discussed in more detail below.

At step 1010, a stock loan is formed, i.e., a trade occurs. This can occur via any of three mechanism, batch auction, continuous trading or negotiated trading, discussed below. Step 1010 corresponds to Fig. 8 step 310.

At step 1025, trading module 710 determines whether any NCMs are involved in the trade. If not, processing continues at step 1045. For each NCM that is involved, at step 1030, trading module 710 appends the CM identifier to the trade in association with the NCM.

At step 1035, trading module 710 determines whether the CM for the NCM should participate in the trade. If not, processing continues at step 1045. When participation occurs, trading module 710 divides the trade into two trades, one for the portion attributable to the NCM, and the other for the portion attributable to the CM, in accordance with the participation apportionment agreement between the CM and NCM.

At step 1045, the trade(s) is recorded in trading database 716 and sent to trading gateway 718, which forwards the trade to middle office gateway 728.

At step 1050, middle office gateway 728 receives the trade, enters it into middle office database 726, and, if necessary, performs trade enrichment. Trade enrichment refers to providing values for fields of a trade to conform to a predetermined specification.

At step 1055, middle office module 720 creates two accounting transactions for each trade: (i) a fail to deliver report from the lender to clearing corp. 50, and (ii) a fail to receive report from the borrower to clearing corp. 50. These two accounting transactions trigger processing, described below, which results in the trade between the borrower and the lender being split into a first trade between the borrower and clearing corp. 50 and a second trade between the lender and clearing corp. 50; in these trades, clearing corp. 50 acts on behalf of ELMS 200. Thus, ELMS 200 provides anonymity and the guarantee of a central clearing party, clearing corp. 50. Middle office gateway 728 forwards the two accounting transactions representing the matched trade to clearing corp. 50.

At middle office gateway 728, a trade can be in any of the following states:

A. Enrichment Processing;
B. Depository confirmation pending;
C. Depository confirmation received;
D. Settled;
E. Insufficient Shares;
F. Insufficient Cash;
G. CM account not found.
A typical state sequence is A → B → C → D. States E, F, G are error states requiring manual intervention to correct the error and return the trade to a sequence where it will settle.

At step 1060, clearing corp. 50 receives the two accounting transactions representing the stock loan, and determines whether the lender has stock in the lender's account with depository corp. 60, and whether the borrower has debit cap room in the borrower's account with depository corp. 60, and if so, sends the trade to depository corp. 60 for settlement. Depository corp. 60 provides a debit cap for each of its members, indicating the dollar value of outstanding trades that a member is permitted to have. The debit cap room is the debit cap minus the outstanding trades, that is, the amount of the debit cap available for new trades.

Thus, clearing corp. 50 accepts an anonymous matched stock loan prior to transfer of the stock and collateral.

At step 1065, depository corp. 60 receives the trade, and transfers the stock and the collateral from its accounts to perform the stock loan, that is, depository corp. 60 settles the trade. Depository corp. 60 maintains an account for each of the borrower, the lender and clearing corp. 50. In a first phase of settlement, stock is removed from the lender's account and placed into the account for clearing corp. 50, and collateral (cash) is removed from the borrower's account and placed into the account for clearing corp. 50. In a second phase of settlement, stock is removed from the account for clearing corp. 50 and placed into the borrower's account, and collateral (cash) is removed from the account for clearing corp. 50 and placed into the lender's account. These phases occur substantially simultaneously. The net result of settlement is that the borrower's account gets the stock and the lender's account gets the collateral. Settlement is discussed below.

At step 1070, depository corp. 60 then sends a settlement confirmation notice to clearing corp. 50. If the trade has not settled, then depository corp. 60 sends a settlement fail notice to clearing corp. 50.

At step 1075, clearing corp. 50 determines whether the trade has settled based on the notice received from depository corp. 60. If the trade has not settled by the time that depository corp. 60 finishes its end-of-day settlement, the trade is discarded. More specifically, clearing corp. 50 sends an error message back to middle office gateway 728 of middle office module 720 of ELMS 200, and deletes the trade. If the trade has settled, clearing corp. 50 performs a novation in which clearing corp. 50, as agent for the principal ELMS 200, interposes itself between the lender and the buyer. Novation is a legal term for the replacement of one contract with another; in this case, the agreement between the lender and the buyer is replaced by two agreements: a first agreement between the lender and clearing corp. 50, and a second agreement between the borrower and clearing corp. 50. After the novation, the lender and borrower are not legally obligated to each other under new SEC rules adopted to allow ELMS 200 to operate.

Clearing corp. 50 is a central clearing party, serving to centralize credit risk in itself. If a lender or borrower goes out of business, it does not matter to the original counterparty, as clearing corp. 50 is responsible for the stock loan. Accordingly, borrowers and lenders can be anonymous to each other in ELMS 200. Since every clearing member's counterparty is clearing corp. 50, it does not matter who the original counterparty was, and so the original counterparty can be anonymous with no risk from the anonymity.

In contrast, in conventional bilateral (non-anonymous) stock loans, the borrower and seller are in contractual privity with each other, so they have to worry about each others' creditworthiness. Additionally, clearing corp. 50 guarantees rebates and cash dividends, which are not guaranteed in the conventional bilateral clearing and settlement of stock loans.

Clearing corp. 50 also guarantees the post-settlement mark-to-market of stock loans, as in the conventional Hedge Program.

Clearing corp. 50 also guarantees buy-ins and sell-outs, discussed below.

Clearing corp. 50 now forwards to middle office 720 the result of the novation, a pair of symmetric trades: (i) a loan from a CM to ELMS 200 with clearing corp. 50 as agent, and (ii) a borrow to a CM from ELMS 200 with clearing corp. 50 as agent.

At step 1080, middle office module 720 receives the settlement notices for the novated trades, and stores them in middle office database 726, and thereafter performs stock loan administrative processing, described below.

At step 1090, clearing corp. 50 performs risk administration processing, wherein for all lenders and borrowers, the risks in the stock loan market are offset in other markets in which clearing corp. 50 serves as a central clearing party, such as options and futures markets. In one embodiment, clearing corp. 50 uses a risk management procedure adapted from bilateral trading.

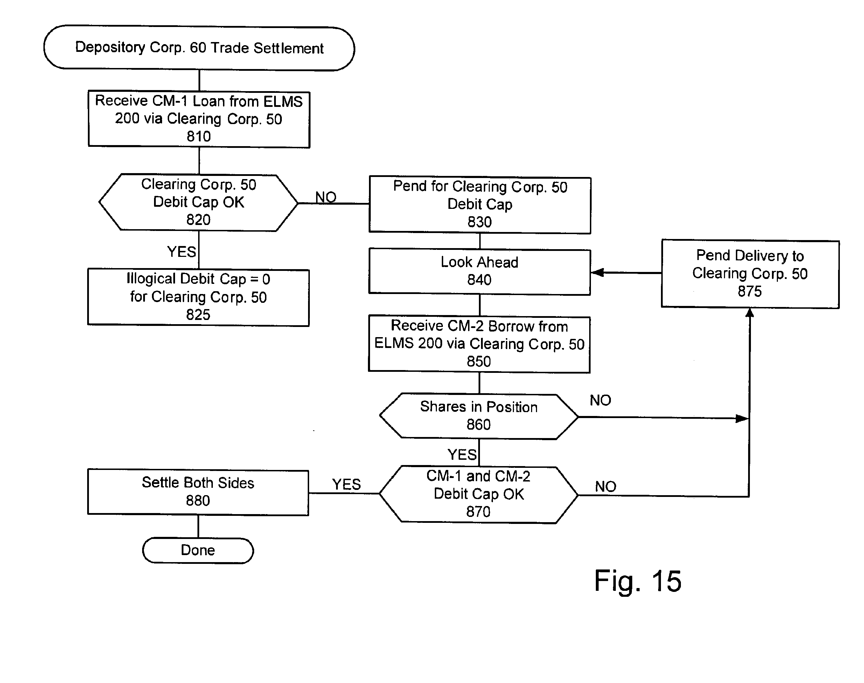

Fig. 15 is a flow chart showing stock loan trade settlement processing performed by a general purpose computer of depository corp. 60. Here, special processing is performed because although ELMS 200 is actually the principal of the trades, the debit caps for the borrower and lender are used to settle the trades. That is, although ELMS 200 is a principal, its debit cap is never checked during settlement, which is a departure from conventional settlement processing. A debit cap is the maximum outstanding amount that a settlement party is allowed to have at any time. The debit cap is set by depository corp. 60 for each of its settlement parties.

At step 810, depository 60 receives one of the pair of symmetric trades, the loan from a CM to ELMS 200.

At step 820, depository 60 checks whether the debit cap for clearing corp 50 has been exceeded. This is really a way to filter ELMS 200 trades out of the normal processing stream. Clearing corp. 50 has a debit cap of 0, so this test will always cause ELMS 200 trades to be rejected from the normal processing stream. Step 825, that the debit cap of clearing corp. 50 is acceptable, will never be reached.

At step 830, depository 60 pends the trade received at step 810.

At step 840, depository 60 waits, also referred to as "looks ahead".

At step 850, depository 60 receives the other of the pair of symmetric trades, the borrow to a CM from ELMS 200. Each trade is identified by its symbol, quantity, price, borrower and loaner, so paired trades can be recognized. If two counter-parties did multiple trades with exactly the same terms, then the different sides are paired without regard for which trade they originated from. Generally, the CMs involved in the pair of symmetric trades are different. It will be appreciated that a NCM could have made the trade, but for clearance and settlement purposes, its affiliated CM is considered to have made the trade.

At step 860, depository 60 checks the shares in the position, that is, depository 60 checks whether the settlement party has these shares in its account at depository 60. If not, the trade cannot settle and processing proceeds to step 875, where the trade is discarded. More specifically, depository corp. 60 sends an error message back to clearing corp. 50, and deletes the trade. Since clearing corp. 50 has checked for shares and cash availability prior to sending the trade to depository corp. 60, step 875 should never occur.

When the outcome of step 860 is positive, then at step 870, depository 60 checks whether the debit caps of the CMs involved in the symmetric trades are not exceeded. If at least one of them is exceeded, processing continues at step 875.

When the outcome of step 870 is positive, then at step 880, depository 60 settles the trades, meaning that it transfers ownership of the security according to the trades.

Operation of matching engine 714 will now be discussed.

Matching engine 714 ensures that only approved trades execute. That is, a trade must satisfy credit limits and activity limits.

Credit limits allow ELMS 200 to control its daily exposure to its CMs and allow each CM to control its daily exposure to its NCMs. Credit limits are set daily and expire at the end of the trading day. Credit limits are maintained on a net basis, borrows minus loans, and on a gross basis, borrows plus loans. Each trade updates both the net and gross limits.

Activity limits relate to the stock that may be loaned or borrowed. Matching engine 714 requires that loans either be from a pre-approved list or be approved on a case-by-case basis. If the trader is an NCM, its CM must approve the loan.

The batch auction mechanism provided through batch auction module 714A will now be discussed. A trader can enter orders to batch auction module 714A either through a screen-based interface or through a computer-to-computer interface, referred to as an application programming interface (API).

Batch auctions are held, on a security-by-security basis, at predetermined daily times, such as 9 am, 10 am, noon, 2 pm and 4 pm, or at every half-hour. Lenders and borrowers submit inventory and needs for particular auctions to an order book. In one embodiment, at the time of order submission, batch auction module 714A checks whether the order comports with the credit limits set by ELMS 200, and if the order is from a NCM, any limits set by the associated CM. Table 11 shows an order book for a particular security, XYZ.

TABLE 11

| FFO rate = 2.55 | | | | Last auction price = -0.05 | |
| --- | --- | --- | --- | --- | --- |
| Estimated next auction price = -0.07 | | | | | |
| XYZ Lend Offers | | | XYZ Borrow Offers | | |
| Trader ID | Quantity | Rebate Rate | Rebate Rate | Quantity | Trader ID |
| 0001 | 100,000 | -0.05 | -0.08 | 50,000 | 0010 |
| 0002 | 100,000 | -0.07 | -0.07 | 100,000 | 0011 |
| 0003 | 200,000 | -0.07 | -0.05 | 50,000 | 0012 |
| 0004 | 150,000 | -0.07 | -0.03 | 200,000 | 0013 |
| 0005 | 300,000 | -0.10 | | | |

The header for the XYZ order book in Table 11 displays that the Fed Funds open interest rate is 2.55%; this is the rate that all trade rates are expressed relative to. The header also displays the last auction price, and the estimated next auction price based on the current contents of the order book. Determination of the auction price is discussed below. The first order is from trader 0001, to lend 100,000 shares at the Fed Funds open interest rate minus 0.05%. The next order is from trader 0002, to lend 100,000 shares at the Fed Funds open interest rate minus 0.07%.

Batch auction module 714A sets a single price, referred to as the equilibrium price, for each auction so as to maximize the amount traded. However, there is no guarantee that any particular inventory or request will trade during a specific auction. This process is referred to as a batch auction.

An equilibrium price is a price having quantity available for trading on both sides, and for which the minimum quantity on a side is maximum relative to the minimum quantity at other prices having quantity available for trading on both sides. If several prices meet these conditions, then the price closest to the previous equilibrium price is used.

Batch auction module 714A determines the equilibrium price using the following procedure:

1. For every price tick level in the interval of crossing prices, aggregate the volume of borrow orders accepting the price level's price and the volume of lend orders accepting the price level's price.

2. For every price tick level, define the turnover as the minimum of the Borrow and Lend aggregated volumes, and the imbalance as the bid volume subtracted by the ask volume.

3. Find the maximum turnover among the price tick levels.

4. If there is a single level where the maximum turnover occurs, this is the equilibrium price. Stop.

5. If there are several levels with maximum turnover, but only one level with maximum turnover and minimum absolute value of imbalance, this level represents the equilibrium price. Stop.

6. If there are several levels with maximum turnover and minimum absolute value of imbalance, choose the price level closest to the reference price (the previous equilibrium price).

7. If there are several levels with maximum turnover and minimum absolute value of imbalance, just as close to the reference price and this imbalance is positive, choose the level nearest the level where the imbalance changes sign. In normal pricing (i.e. where a high bid price is better than a low) this means that the price of the highest level is chosen.

For reversed pricing (used in some types of bond trading), the price of the lowest price level is chosen.

8. If there are several levels with maximum turnover and minimum absolute value of imbalance, just as close to the reference price and this imbalance is negative, choose the level nearest the level where the imbalance changes sign. In normal pricing (i.e. where a low ask price is better than a high), this means the price of the lowest price level is chosen. For reversed pricing (used in some types of bond trading), the price of the highest price level is chosen.

9. If there are several levels with maximum turnover and minimum absolute value of imbalance, just as close to the reference price and this imbalance is zero, choose the price tick closest to the midpoint of this interval as equilibrium price. If there are two price levels equally close to the midpoint, choose the price that represents an even number of price ticks.

If there are several orders that are equally eligible to participate in a trade, in the primary market, the incentive wheel procedure is used to determine who participates, discussed above with regard to Fig. 8B step 356.

If there are several orders that are equally eligible to participate in a trade, in the secondary market, a first-come-first-served procedure is employed, to encourage traders to enter their orders early rather than in the moments before the auction starts.

An example of determining the equilibrium price for a batch auction will now be discussed.

The Reference Price is the price at which the most recent trade occurred, prior to the current batch auction; generally this will be the price of the previous batch auction, although other price sources may be available. For securities lending, the price is an interest rate for the stock loan, and the interest rate is expressed relative to the Fed Funds (FED) rate. Assume that the Reference Price is +4, i.e., if FED is 5.35, then the Reference Price is an interest rate of 5.39%.

Table 12 shows the orders submitted to the batch auction process in this example.

TABLE 12

| XYZ Lend Offers | | XYZ Borrow Offers | |
|---|---|---|---|
| Quantity | Rebate Rate | Rebate Rate | Quantity |
| 100,000 | -0.05 | -0.08 | 10,000 |
| 50,000 | -0.06 | -0.08 | 15,000 |
| 25,000 | -0.06 | -0.08 | 25,000 |
| 25,000 | -0.06 | -0.07 | 50,000 |
| 350,000 | -0.07 | -0.07 | 50,000 |
| 200,000 | -0.07 | -0.07 | 50,000 |
| 500,000 | -0.08 | -0.06 | 150,000 |
| 50,000 | -0.08 | -0.05 | 200,000 |
| 550,000 | -.09 | -0.04 | 200,000 |
| 850,000 | -0.10 | -0.03 | 400,000 |

Following the equilibrium price calculation procedure gives the result shown in Table 13, also referred to as an "uncross table".

TABLE 13

| Level of Rebate | Lend Volume | Borrow Volume | Turnover | Imbalance |
|---|---|---|---|---|
| -0.10 | 850,000 | 0 | | 850,000 |
| -0.09 | 550,000 | 0 | | 550,000 |
| -0.08 | 550,000 | 50,000 | 50,000 | 500,000 |
| **-0.07** | **550,000** | **150,000** | **150,000** | **400,000** |
| -0.06 | 100,000 | 150,000 | 100,000 | -50,000 |
| -0.05 | 100,000 | 200,000 | 100,000 | -100,000 |
| -0.04 | 0 | 200,000 | | -200,000 |
| -0.03 | 0 | 400,000 | | -400,000 |

The table in this example is simplified: rows having the exact same values are not displayed. In practice, there is one row for each price tick. An equilibrium price of -0.07 (the previous reference price) will be selected, since it leads to the highest turnover in this batch auction, it leads to the least absolute imbalance of those with the highest turnover, and it lowers market volatility by selecting the level closest to the reference price.

Since the order book is visible between batch auctions to members of ELMS 200, including the estimate of the next auction price, price discovery information is available. An advantage of making the order book visible is that the price of popular inventory is likely to increase from the visibility, so the price that lenders get using ELMS 200 is improved relative to the conventional process of manual price discovery.

Abusing the batch auction mechanism for price manipulation is a concern. To address this concern, a randomized uncross period is employed in which auctions for different symbols occur in a randomized order at each auction, and the start of the auction differs from the nominal auction time by a randomized amount.

For example, assume ELMS 200 trades XYZ, AAA and QQQ stock loans, each batch auction takes 1 minute, and the next scheduled auction time is 10:00 am. The first type of randomization determines the order that the batch auctions occur, such as AAA, QQQ, XYZ. The next randomization determines the start time, in this example 10:02 am. So, the auctions occur as follows: 10:02 am AAA, 10:03 am QQQ, 10:04 am XYZ.

Continuing with the example, assume that the next scheduled auction time is 11:00 am. After applying new randomizations, the auctions occur as follows: 11:05 am QQQ, 11:06 am AAA, 11:07 am XYZ.

Orders can be entered to the auction until the actual auction time. Thus, it is not possible for a trader to use a program that ensures the trader's order will be the last order entered to the auction.

The continuous trading mechanism provided through continuous trading module 714B will now be discussed. A trader can enter orders to continuous trading module 714B either through a screen-based interface or through a computer-to-computer interface, referred to as an application programming interface (API).

After a batch auction, some of the orders at the auction price may remain unexecuted ("residual orders"). These residual orders are available to a continuous trading process. Via a screen-based interface, traders can then execute against these residual orders at the last auction price until the next auction occurs. Continuous trading module 714B ensures that the execution comports with credit limits set by ELMS 200, and if the trader is a NCM, that the trade is approved by the CM for the NCM. A trader can also enter a new order at the last auction price to order book, in which case the new order is available for continuous trading.

When a batch auction occurs, continuous trading is not available until the batch auction ends, because all orders in the order book are involved in the batch auction.

In other words, in the time interval between batch auctions, the portion of the order book at the last execution price is available for continuous trading. The continuous trading process provides order execution but not price discovery.

The negotiated trade facility (NTF) provided through NTF module 714C will now be discussed. A trader can enter orders to NTF module 714C only through a screen-based interface. An API is not available for negotiated trading.

In the NTF provided by ELMS 200, traders enter trading interests to find other traders to negotiate with via exchanging structured messages. The traders are anonymous but have system-generated ratings that are displayed to other traders. A trader can negotiate with multiple parties and then pick one to trade with. After traders agree on a trade, ELMS 200 retains counterparty information so that a recall or return is applied against the party that participated in negotiating the trade; this is fair because the negotiation may have resulted in an unusual trade term.

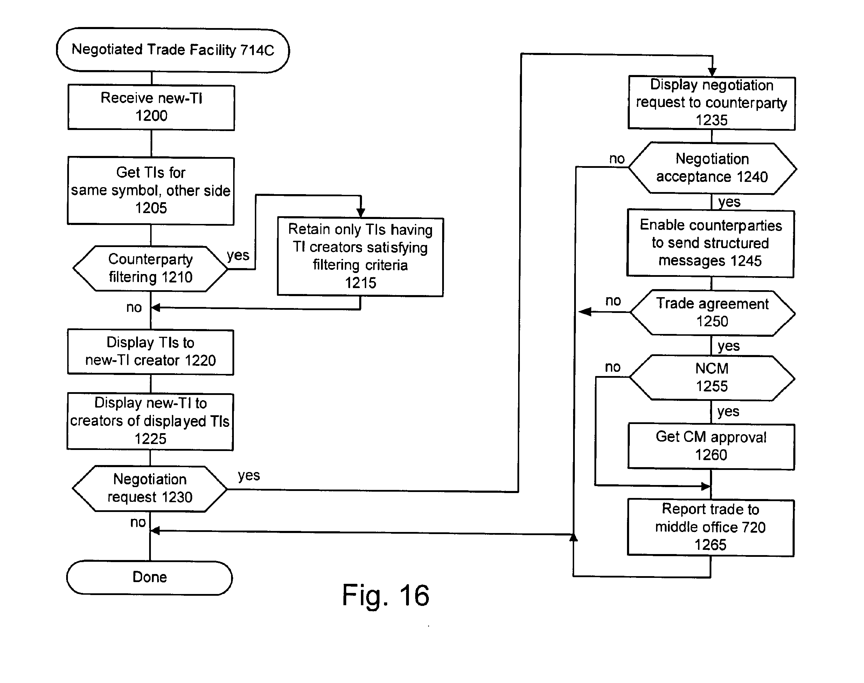

Fig. 16 depicts processing performed by NTF module 714C.

At step 1200, NTF module 714C receives a new trading interest created via a screen-based interface.

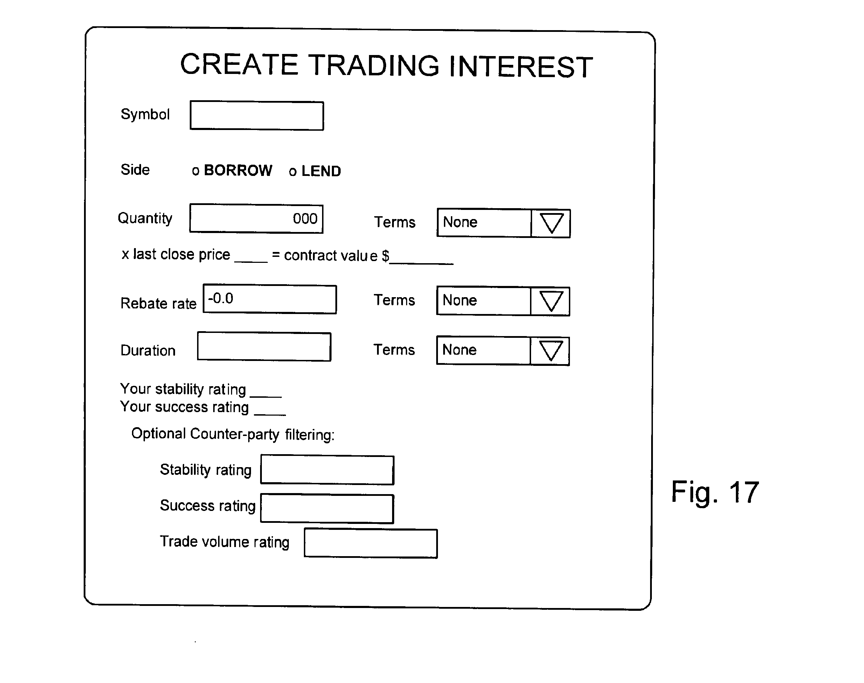

Fig. 17 shows a screen-based interface for creating a trading interest. The trader enters values for the symbol that he/she is interested in trading (ex: XYZ), the side (borrow or sell), the quantity (ex: 10,000 shares) (the system provides an over-ridable default of 000 to indicate thousands of shares), the rebate rate (the system provides an over-ridable default of the polarity (+/-) and the first few digits of the rebate rate based on the last execution price), and the duration in days. When the trader enters a symbol and quantity, ELMS 200 automatically provides the last closing price for the symbol, typically last night's price, and computes and provides the value of the contract.

Each of the quantity, rebate rate and duration is associated with a terms drop-down menu that enables a trader to provide more information to a potential counter-party. In one embodiment, the quantity terms include:

- None

- More available

- All or none required

- Partial fill okay
  The rebate rate terms include:

- None

- Or better

- Non-negotiable
  The duration terms include:

- None

- Up to one week okay

- Up to one month okay

- Up to three months okay

- Up to six months okay

- Up to one year okay
  ELMS 200 displays the trader's ratings, as they will be displayed to potential counter-parties.

ELMS 200 also enables the trader to filter counter-parties by their ratings; in one embodiment, filtering is possible only for displayed ratings, in other embodiments, filtering can be performed for ratings that are not displayed to traders but are computed by ELMS 200. For instance, a trader may be able to see only stability ratings and success ratings, but be able to filter by stability rating, success rating and trade volume rating. The stability rating indicates whether a trader has generally abided by the terms of his or her trades, that is, no early returns or recalls. The success rating is the percentage of trading interests that result in a trade; this gives a counter-party a clue as to whether someone is just browsing or is a serious trader. The trade volume rating indicates how many trades were done during a predetermined time period using ELMS 200 via NTF, batch auctions and continuous trading. These ratings are illustrative only, and other ratings will be apparent to those of ordinary skill. Other factors may be considered in how ELMS 200 computes a rating for a trader.

A trader may choose to trade with another trader who has a poor rating if, for example, the poorly rated trader is willing to pay a higher price, or has hard to find securities.

If a trader specifies filtering criteria for counter-parties, then only those counter-parties that meet the criteria will be notified of the existence of the trading interest. Additionally, when the trader specifies filtering criteria, the trader is shown only trading interests for potential counter-parties that meet the filtering criteria.

After a trader creates a trading interest, ELMS 200 assigns an ID number to the trading interest and stores it in trading database 716.

At step 1205, NTF module 714C gets all stored trading interests that are for the same symbol and the opposite side.

At step 1210, NTF module 714C determines whether counterparty filtering is specified for this trading interest. If not, processing continues at step 1220. If counterparty filtering has been specified, then at step 1215, NTF module 714C discards the trading interests whose creators do not fulfill the conditions specified in the counterparty filtering instructions of the new trading interest.

At step 1220, NTF module 714C displays potential counterparty trading interests to the creator of the new trading interest.

At step 1225, NTF module 714C displays the new trading interest to the potential counterparties for the new trading interest.

At step 1230, NTF module 714C determined whether there has been a negotiation request from any of the potential counterparties or the creator of the new trading interest. If not, processing is complete.

If there has been a negotiation request, then at step 1235, NTF module 714C displays the negotiation request to the counterparty, along with the rating information of the requestor.

At step 1240, NTF module 714C determines whether the negotiation request has been accepted. If not, processing is complete.

If the negotiation request has been accepted, then at step 1245, NTF module 714C enables the counterparties to send structured messages to each other. As used herein and in the claims, a "structured message" is a message that has been created via a screen-based interface that enables entry of required values and optional values and optional selection of terms from drop-down menus.

At step 1250, NTF module 714C determines that a trade agreement has been reached, generally by noticing that appropriate structured messages have been exchanged by the counterparties. In one embodiment, if there is no trade agreement within a predetermined time of commencing negotiation, then the negotiation automatically expires and processing is complete.

If an agreement has been reached, then at step 1255, NTF module 714C determines whether an NCM is involved in the trade. If not, processing continues at step 1265.

At step 1260, NTF module 714C obtains approval for the trade. First, NTF module 714C checks whether the CM has pre-approved the NCM for this trade. If not, then NTF module 714C generates a real-time approval request and presents it to the CM. If approval is not obtained, then the parties are notified and the negotiation terminates.

At step 1265, NTF module 714C reports the trade to middle office 720. NTF module 714C maintains an audit trail of each structured negotiation. The templates are designed so that the traders cannot use NTF module 714C to find each other and then consummate the trade outside of ELMS 200. Thus, anonymity is preserved in the NTF for the benefit of the traders and for the benefit of ELMS 200.

For negotiated trades, knowledge of the counter-party is preserved even after the novation. A recall or return or re-rate relating to the negotiated trade affects only the counter-party to the trade. Identity preservation encourages parties to negotiate only what they are willing to live with.

An example of negotiated trading will now be discussed.

Assume that trader 735 creates a trading interest (TI) as follows:

| TI ID no. | symbol | side | quantity | rebate rate | duration (days) | ratings |
|-----------|--------|------|----------|-------------|-----------------|---------|
| 112233 | IBM | lend | 10,000 | -0.05 | 90 | 4.8/3.3 |

This TI is assigned an ID number of 112233 by ELMS 200 when it is created. TI 112233 is for IBM stock, on the lend side, 10,000 shares at a rebate rate of -0.05 for 90 days. The creator of TI 112233 has system generated ratings of 4.8/3.3 on a scale of 1 to 5, based on trader 735's behavior observed by ELMS 200; that is, with regard to stability rating, trader 735 has generally abided by the terms of his or her trades and earned a high score of 4.8, while as to success rating, trader 735 has a score of 3.3 indicating that the trader does a fair amount of browsing.

After creating a trading interest, trader 735 is presented with a list of all potential counter-parties, filtered in accordance with the trader's filtering criteria for the trading interest, if any. Trader 735 may elect to negotiate with none, one or multiple counter-parties. Assume that trader 735 elects not to negotiate with any of the counter-party trading interests presented. At any time, trader 735 may return to the potential counter-party screen, although some trading interests may execute without notification to trader 735. When a new potential counter-party trading interest exists, trader 735 will be automatically notified.

Now assume that trader 736 (not shown) creates a TI as follows:

| TI ID no. | symbol | side | quantity | rate | duration (days) | ratings |
|-----------|--------|--------|----------|-------|-----------------|---------|
| 112244 | IBM | borrow | 50,000 | -0.02 | 10 Up to year ok | 4.2/4.0 |

This TI is assigned an ID number of 112244 by ELMS 200 when it is created. TI 112244 is for IBM stock, on the borrow side, for 50,000 shares at a rebate rate of -0.02 for a duration of 10 days, with up to one year okay. The creator of TI 112244 has system generated stability/success ratings of 4.2/4.0.

NTF module 714C determines that a trade may occur based on comparing the terms of TIs 112233 and 112244, specifically, the symbol and different sides, so each of traders 735 and 736 receives notice that there is a relevant trading interest for them. For example, a pop-up window may be provided to trader 735 by NTF module 714C, while trader 736 is provided with a screen-based display showing all potential counter-party trading interests.

One of traders 735 and 736 initiates structured negotiation by, for example, clicking on the TI ID no. on a screen display. In response to the initiation, NTF module 714C notifies the other of traders 735 and 736, such as via a pop-up window on a screen display. If the other trader accepts the opportunity to negotiate, then NTF module 714C provides a window on the screen of each trader, where they may receive structured messages from the other party and send structured messages to the other party, like an instant messaging chat.

More generally, parties using the NTF can discover information about each other via their order profile. An order profile comprises a user-generated profile and a system-generated profile. The user-generated profile is populated by the ELMS 200, and is visible to anyone selecting a TI belonging to the user. The user-generated profile can contain some or all of the following: (i) full identity of the user, (ii) minimum and maximum preferred trading size, and (iii) minimum and maximum preferred contract holding duration. The values in the user-generated profile section may or may align with actual user behavior, as observed by the system

The system-generated profile contains values reflecting the observed behavior of the user, the values being produced by middle office 720, and these values cannot be changed by the user, including:

1. Number of TIs issued by this participant
2. Number of contra-side TIs found by the NTF
3. Number of negotiations entered by this participant
4. Number of trades formed via NTF for this participant
5. Average trade size across all names in a given security class (separately loan / borrow).
Thus, the system will have a metric for an average general collateral stock loan/borrow, average hot stock loan/ borrow, and so on.
6. Average transaction holding time across all names in a given security class
7. For transactions that have a pre-agreed duration specified, the percentage that was terminated by the participant before the term date
8. Percentage of transactions that resulted in some sort of operational failure: FTD, buy-in, and so on.
9. Percentage of trade interests that resulted in negotiation
10. Percentage of trade interests that resulted in completed trades
11. Post-trade term performance - this metric only applies to trades that had an explicit term agreed on. The term in NTF trades is a soft term, and it is tracked, but not enforced by the system. However, if a trade is terminated before the term, the terminating counterparty is tagged, and a statistic describing percentage of the trades terminated before term is developed and added to the participant's system profile. One exclusion to this is the trade terminated early by mutual agreement with the original counterparty (essentially, a term adjustment). Note that these are behavior metrics, not stability metric: ELMS 200 does maintain stability metrics separately as average duration of the trades from inception to the time the party in question recalls or returns. The main point here is that providing unstable supply is not considered bad behavior, whereas unilaterally terminating before committed term is considered bad behavior.
12. Post-trade delivery performance - the participants' record of failed delivery, including initial delivery, recall delivery and buy-in incidents, as a percentage of overall trading volume.
No participant (user) can observe the system-generated profile of another participant directly. Profile data is only used by the system to provide information about a TI creator to a potential NTF counter-party.

This system generated trading performance values are used to determine a participant's propensity to "lurk" without trading. When the values exceed (positively or negatively) predetermined thresholds, ELMS 200 produces an exception report for manual follow-up with the participant, to understand why its performance has crossed the threshold.

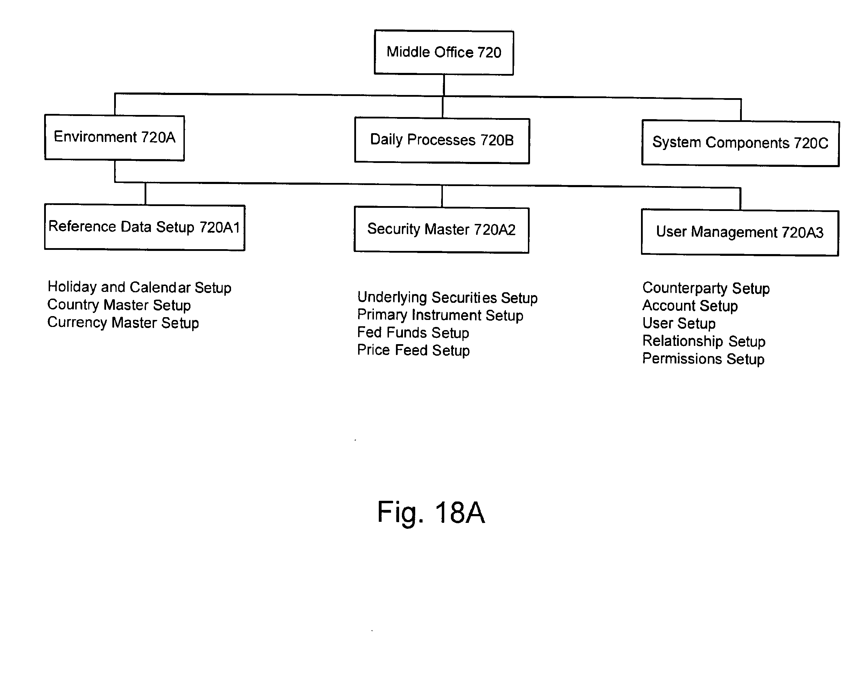

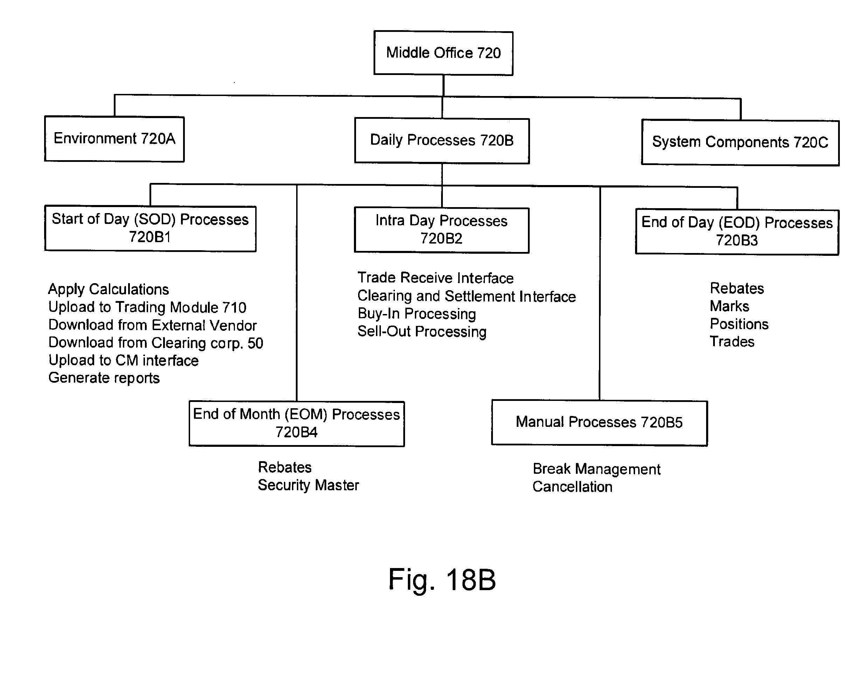

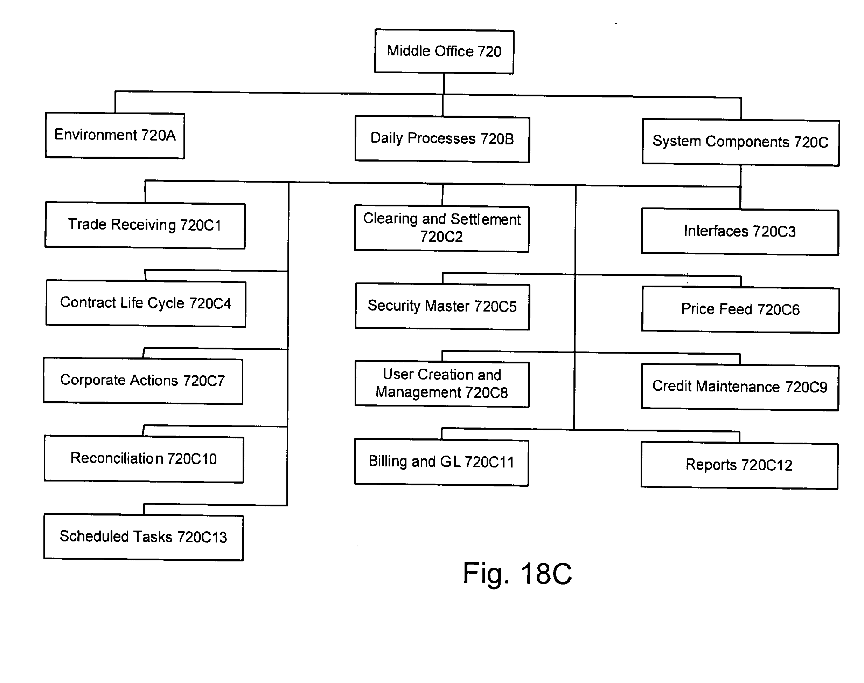

Figs. 18A-18C, collectively referred to as Fig. 5, are a chart showing the functions performed by middle office module 720, organized as system environment setup 720A, daily processes 720B, and system components 720C.

System environment setup 720A includes reference data setup 720A1, security master 720A2, user management 720A3. As used herein, "user" refers to an administrator.

Reference data setup 720A 1 includes

- Holiday and Calendar Setup - As holidays and/or their dates differ from year to year, it is necessary to update holidays which would affect securities lending activity for all members of ELMS 200. The holiday calendar of the New York Stock Exchange governs. Holidays may be added, deleted or customized where appropriate.

- Country Master Setup - Enables the user to add, delete or amend any pertinent country in the ELMS 200 database. It also entry of the calendar type and currency name pertaining to the given country.
- Currency Master Setup - Allows the user to add, delete or amend a particular currency as it pertains to its associated country code.

  Security master 720A2 includes

- Underlying Securities Setup - Allows the user to create and view highest level of securities under which falls individual identifiers.
- Primary Instrument Setup - Allows user to set up security at the primary level. A primary instrument trades only on the primary market and is therefore limited to stable lenders.
- Fed Funds (FF) Setup - Allows the user to update the FF rate on a daily basis.
- Price Feed Setup - Allows the uses to manually update prices in the event the price does not come in inclusive with the daily price feed.

  User management 720A3 includes

- Counterparty Setup - Enables the user to set up an initial counterparty including all pertinent information.
- Account Setup - Allows the user to set up all account information for a particular user.
- User Setup - Allows the user to set up individual users at each individual client who will be allowed on the system and their functionality.
- Relationship setup - Enables definition of relationships between CMs and NCMs. Initially, an NCM must request a relationship with a CM in order to clear securities through them. This is performed under new CM relationship in the User Management tab. If the CM desires a relationship with said NCM, they can approve such a request within the same tab under approve NCM request. The CM can view NCM relationships as well as all pertaining information under the View Relationships screen. NCM's can view outstanding relationships under the NCM Relationships screen.
- Permissions Setup - Allows the user to set up what functions a client/user is allowed to perform

The Maintain Trading Account Screen is found in the User Management tab of ELMS 200. This maintenance screen allows the user to add, amend and delete various accounts as part of their universe. Within this screen, the user may set up the account ID, account number, type, category, gross percent credit limit, net percent credit limit and account status.

Daily processes 720B include start-of-day (SOD) processes 720B1, intraday processes 720B2, end-of-day processes 720B3, end-of-month (EOM) processes 720B4, and manual processes 720B5.

Start-of day (SOD) processes 720B1 includes

- Apply Calculations - Enables and applies calculations to perform daily SOD functionality.
- Upload to Trading Module 710 - Uploads data to trading module 710. Each morning, the following entities are sent from middle office module 720 to trading module 710: Account, Calendar, Closing Price, Interest Rate, Instrument, Member, NCM Allowed Functions, Position, Position Event, Underlying, User, User Role. At the start of each day, the credit figures for each counterparty are determined, including any of the outstanding rebate payments/receivables. Generally, for each NCM the Start of day Credit Available is the value assigned by the CM, as updated by trading activity.

  Middle office module 720 provides the start of day credit figures for each of the NCMs and their respective CMs to trading module 710.

- Download from External Vendor - An external vendor, such as FT Interactive, sends a daily file of security master data to middle office module 720.
- Download from Clearing Corp. 50 - This process retrieves data from clearing corp. 50 such as settled trades and exception information.
- Upload to CM Interface - This process provides data to each CM such as settled trades and trade exception information.
- Generate Reports - This process generates morning reports.

  Intraday processes 720B2 includes

- Trade Receive Interface - This process receives executed trades, including recalls and returns, from trading module 710 and commences enrichment processing, as described above.
- Clearing and Settlement Interface - This process sends trades to clearing corp. 50 for clearance and settlement, and receives confirmations and error messages from clearing corp. 50 and depository corp. 60.
- Buy-In Processing - This process supports buy-in processing, discussed below.
- Sell-Out Processing - This process supports sell-out processing, discussed below.

The entities sent from middle office module 720 to trading module 710 intraday are: Change credit limit on a Member, REGSHOW on underlying, Dividend on underlying, Suspend/release trading on underlying, Suspend/Release Member, depository corp. exception (a text message that is sent to a specific member),

Buy-in processing will now be discussed. In the following discussion, references to ELMS 200 mean intraday processes 720B2, the buy-in processing process, of middle office module 720.

A Buy-in is an action whereby collateral held versus a loan is seized and new shares are purchased on the open market. These shares are used in order to settle the original outstanding trade. After a buy-in is executed, the loan is closed and any remaining collateral is settled between the parties.

If a security is not returned from recall, ELMS 200 automatically executes a buy-in at close of business on a predetermined number of days after the recall, such as the third day after the recall, conveniently referred to as day T+3. In one embodiment, the buy-in can occur up to an indeterminate number of days after the recall. In another embodiment, if the buy-in does not occur after a predetermined number of days, presumably because the stock is not available to buy anywhere at any price, then on day T+n, cash settlement occurs.

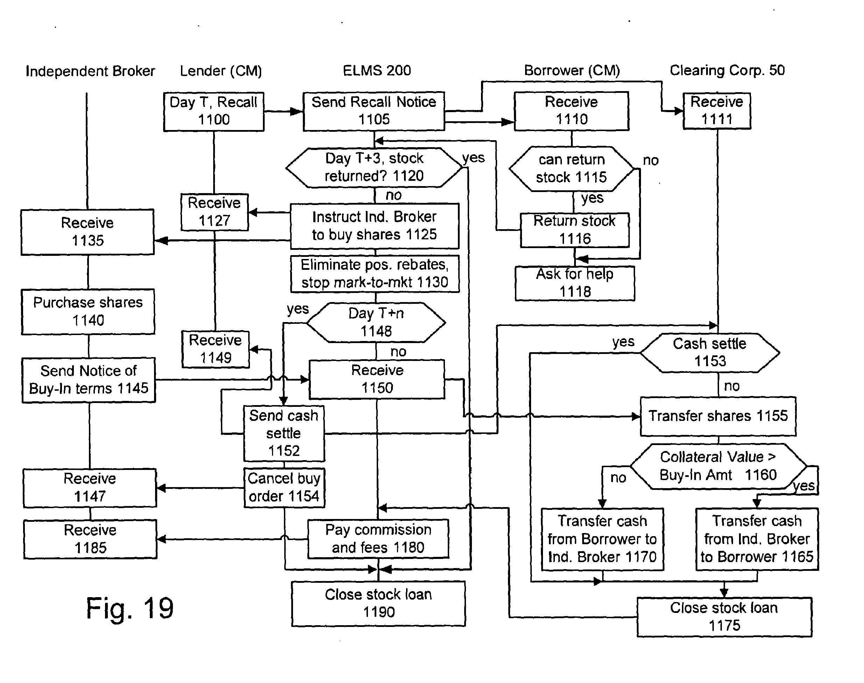

Fig. 19 shows buy-in processing.

At step 1100, on day T, the lender of the shares sends a share recall to ELMS 200.

At step 1105, on day T, ELMS 200 sends a recall notice to the borrower of the shares, the CM for the borrower, if any, and clearing corp. 50. The recall notice includes the date of the contract to be closed, the quantity and contract price of the securities covered by the contract, the settlement date of the contract and any other information deemed necessary to properly identify the contract to be closed. The recall notice states that unless delivery is effected at or before a certain specified time, the security may be "bought-in" on the date specified for the account of the lender. The recall notice also provides the name and telephone number of the individual authorized to pursue further discussions concerning the buy-in.

At step 1111, clearing corp. 50 receives the recall notice so that it can properly recognize activity relating to closing a trade as opposed to creating a new trade.

At step 1110, the borrower receives the recall notice. At step 1115, the borrower determines whether it can return the stock. If not, at step 1118, the borrower should ask for help, and a staff member at ELMS 200 assists in finding a substitute borrow on a best efforts basis; the rate of the new position, if any, may be more expensive than the original borrow. If a substitute stock borrow is located, it is placed into the account at ELMS 200 of the borrower. If a substitute stock borrow is not found, then the borrower simply does nothing, which triggers a forced stock buy at step 1140, discussed below.

If the borrower can return the stock, at step 1116, the borrower returns the stock by day T+3, i.e., three days after day T.

Although the recall notice is presented to the borrower(s) and the CM(s), it is the CM's responsibility to return the stock to ELMS 200. If the borrower is unable to find a substitute borrow, the CM(s) may deliver out of inventory and set up a new loan for the NCM(s) or allow the buy in to occur.

On day T+3, at step 1120, ELMS 200 checks whether the stock has been returned. If so, then no buy-in is performed and processing proceeds to step 1190, discussed below. If the stock has not been returned, then buy-in processing is performed, as discussed below. In this situation, the lender is stuck. Generally, the lender recalls shares because the actual owner, such as a pension fund, has traded the shares. The lender does not want its recall problems to preclude the pension fund from trading its shares.

At step 1125, ELMS 200 sends an instruction to an independent broker to purchase stock to satisfy the share recall of the lender. The borrower is responsible for all fees related to the buy-in and any shortfall related to the buy-in. If there is a surplus after completion of buy-in and associated fees, it is returned to the borrower. If the stock cannot be bought in the open market, the independent broker continues trying until the stock can be bought. ELMS 200 also notifies the lender of the buy-in.

At step 1127, the lender receives notice of the buy-in instruction so the lender can comply with Rule 204T(b) which restricts the lender from short sales in the security until the independent broker executes the buy-in and the purchase settles. At step 1130, ELMS 200 sets all positive rebate rates to zero and all negative rebate rates are left alone, and mark-to-market activity for this loan ceases.

At step 1135, the independent broker receives the purchase instruction from ELMS 200.

At step 1140, the independent broker purchases the shares. This may occur immediately, or may take days to occur. The buy-in occurs when the independent broker purchases the shares.

At step 1145, the independent broker notifies ELMS 200 of the terms of the forced share purchase (buy-in).

At step 1148, ELMS 200 checks whether the cash settlement day, T+n, has arrived without a buy-in. If not, processing continues at step 1150. If so, at step 1152, ELMS 200 sends a cash settlement notice to clearing corp. 50, and at step 1154, ELMS 200 sends a buy order cancellation to the independent broker, and processing continues at step 1190.

At step 1147, the independent broker receives the cancellation of the buy order and terminates its efforts to buy.

At step 1149, the lender receives notice of the cash settlement instruction, so that the lender can demonstrate compliance with the close-out requirement of SEC Rule 204T.

At step 1150, ELMS 200 receives the buy-in notice from the independent broker, and sends the buy-in information to clearing corp. 50. At this point, ELMS 200 knows that shares have been found to satisfy the recall notice of the lender.

At step 1153, clearing corp. 50 receives the cash settlement notice from ELMS 200. When a cash settlement occurs, clearing corp. 50 determines a cash settlement value for the loaned stock that was not returned from the borrower to the lender. If the collateral exceeds the cash settlement value, the excess is paid to the borrower. If the collateral is less than the cash settlement value, clearing corp. 50 pays the deficiency to the lender, and the borrower pays the deficiency to clearing corp. 50. Processing continues at step 1175. If a cash settlement does not occur, processing continues at step 1155.

At step 1155, clearing corp. 50 transfers the shares from the independent broker to clearing corp. 50 acting as agent for ELMS 200, and then transfers the shares from clearing corp. 50 acting as agent for ELMS 200 to the lender.

At step 1160, clearing corp. 50 checks whether the value of the collateral for the stock loan, adjusted for commissions and fees, exceeds the buy-in amount, that is, the price that the independent broker paid for the shares.

If the adjusted value of the collateral for the stock loan exceeds the buy-in amount, then at step 1165, clearing corp. 50 transfers cash from the independent broker to clearing corp. 50 acting as agent for ELMS 200, and then transfers cash from clearing corp. 50 acting as agent for ELMS 200 to the borrower.

If the adjusted value of the collateral for the stock loan is less than the buy-in amount, then at step 1170, clearing corp. 50 transfers cash from the borrower to clearing corp. 50 acting as agent for ELMS 200, and then transfers cash from clearing corp. 50 acting as agent for ELMS 200 to the independent broker.

At step 1175, clearing corp. 50 closes the loan and sends a notice to ELMS 200 that clearance has occurred.

At step 1180, ELMS 200 pays commissions and fees to the independent broker, and debits the borrower for the amounts of the commissions and fees.

At step 1185, the independent broker receives the commissions and fees.

At step 1190, after the stock is provided, the stock loan is closed and collateral and any fees are settled.

Sell-out processing will now be discussed. In the following discussion, references to ELMS 200 mean intraday processes 720B2, the sell-out processing process, of middle office module 720.

A Sellout is an action, triggered by the failure to return collateral, whereby shares, that were returned from a loan, are sold on the open market. These proceeds from sale of the shares are used to provide collateral, usually cash, in order to settle the original outstanding trade. After a sell-out is executed, the loan is closed.

If collateral is not provided after a return of sharesl ELMS 200 automatically executes a sell-out at close of business on a predetermined number of days after the return, such as the third day after the return, conveniently referred to as day T+3.

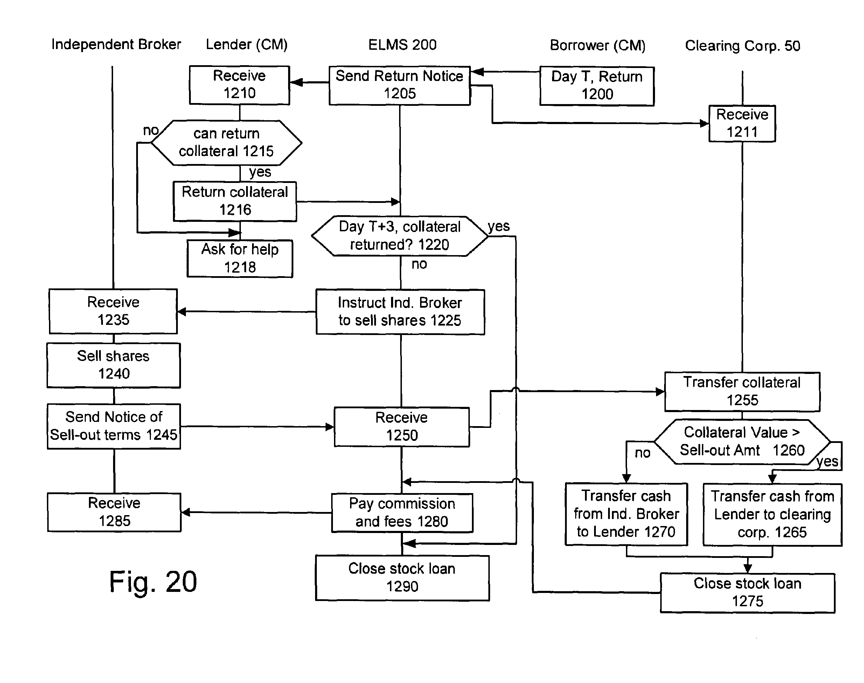

Fig. 20 shows sell-out processing.

At step 1200, on day T, the borrower of the shares sends a share return to ELMS 200.

At step 1205, on day T, ELMS 200 sends a return notice to the lender of the shares, the CM for the lender, if any, and clearing corp. 50. The return notice includes the date of the contract to be closed, the quantity and contract price of the securities covered by the contract, the settlement date of the contract and any other information deemed necessary to properly identify the contract to be closed. The return notice states that unless collateral delivery is effected at or before a certain specified time, the security may be "sold-out" on the date specified for the account of the borrower. The return notice also provides the name and telephone number of the individual authorized to pursue further discussions concerning the sell-out.

At step 1211, clearing corp. 50 receives the return notice so that it can properly recognize activity relating to closing a trade as opposed to creating a new trade.

At step 1210, the lender receives the return notice. At step 1215, the lender determines whether it can return the collateral. If not, at step 1218, the lender should ask for help. Although the return notice is presented to the lender and the CM, it is the CM's responsibility to return the collateral to ELMS 200.

If the lender can return the collateral, at step 1216, the lender returns the collateral by day T+3, i.e., three days after day T.

On day T+3, at step 1220, ELMS 200 checks whether the collateral has been returned. If so, then no sell-out is performed and processing proceeds to step 1290, discussed below. If the collateral has not been returned, then sell-out processing is performed, as discussed below.

At step 1225, ELMS 200 sends an instruction to an independent broker to sell the recently returned stock to provide funds for collateral. The lender is responsible for all fees related to the sell-out and any shortfall related to the sell-out. If there is a surplus after completion of sell-out and associated fees, it is returned to the lender

At step 1235, the independent broker receives the purchase instruction from ELMS 200.

At step 1240, the independent broker sells the shares. This may occur immediately, or may take days to occur. The sell-out occurs when the independent broker sells the shares.

At step 1245, the independent broker notifies ELMS 200 of the terms of the forced share sale (sell-out).

At step 1250, ELMS 200 receives the sell-out notice from the independent broker, and sends the sell-out information to clearing corp. 50. At this point, ELMS 200 knows that some funds have been found to satisfy the collateral for the return notice of the borrower.

At step 1255, clearing corp. 50 transfers the share sale funds from the independent broker to clearing corp. 50 acting as agent for ELMS 200, and then transfers the share sale funds from clearing corp. 50 acting as agent for ELMS 200 to the borrower.

At step 1260, clearing corp. 50 checks whether the value of the collateral for the stock loan, adjusted for commissions and fees, exceeds the sell-out amount, that is, the price for which the independent broker sold the shares.

If the adjusted value of the collateral for the stock loan exceeds the sell-out amount, then at step 1265, clearing corp. 50 transfers cash from the lender to clearing corp. 50 acting as agent for ELMS 200, and then transfers cash from clearing corp. 50 acting as agent for ELMS 200 to the borrower.

If the adjusted value of the collateral for the stock loan is less than the sell-out amount, then at step 1270, clearing corp. 50 transfers cash from the independent broker to clearing corp. 50 acting as agent for ELMS 200, and then transfers cash from clearing corp. 50 acting as agent for ELMS 200 to the lender.

At step 1275, clearing corp. 50 closes the loan and sends a notice to ELMS 200 that clearance has occurred.

At step 1280, ELMS 200 pays commissions and fees to the independent broker, and debits the lender for the amounts of the commissions and fees.

At step 1285, the independent broker receives the commissions and fees.
At step 1290, after the stock is provided, the stock loan is closed and collateral and any fees are settled.

End-of-day processes 720B3 includes

- Rebates - This process supports rebate processing. The flow for rebate management is as follows.

    1. For each contract, apply the latest available rate to the contract. For this, look for the maximum date when the rate might have been applied and then fetch the rebate on that date.
    2. Fetch the latest quantities after taking into account all the returns and recalls.
    3. Store the rebate for each day for each contract, including the following details:

        a. Trade Id - The unique identifier for the contract
        b. Counterparty - The counterparty name or id who has booked the trade
        c. Parent Counterparty - The parent counterparty for the trading member, for example the prime broker
        d. Security Identifier
        e. Quantity - The original quantity on the contract
        f. Quantity returned - The sum of all quantities returned. There could be multiple partial returns on the contract and hence the need for a sum
        g. Rate - The original rate on the contract
        h. Last Rate - The last rate that the contract has been re-rated upon
        i. Contract Value - This is computed as

$$[(Closing\ price * 1.02) \uparrow *(Quantity\text{-}Quantity\ Returned)$$

        where $\uparrow$ means rounded to the nearest dollar
        j. Rebate for the day - This is computed as

$$[(Closing\ price * 1.02) \uparrow *(Quantity\text{-}Quantity\ Returned)* (Last\ Rate/100)] / x$$

        where x = number of days set for the year for that particular security
        At any point in time, the total rebate paid in any given period is the aggregation of rebate amounts across the given period. The rebates are maintained individually for each contract, and are aggregated for the trading member NCM and the prime broker CM.

Rebate reports are prepared by ELMS 200. A Net Rebate Report is sent from ELMS 200 to clearing corp. 50 that aggregates the rebates that have to be moved from different accounts at clearing corp. 50. A Summary of transactions by clearing member is sent from ELMS 200 to each CM. Reports sent to clearing corp. 50 and depository corp. 60 contain gross quantity to be moved from one Prime Broker to ELMS 200 and gross quantity to be received from ELMS 200 to Prime Broker. Cash movement is summed for each Prime Broker for the gross quantities.

- Marks - This process supports daily re-valuation of a contract based on the current market value. At the end of each day, clearing corp. 50 sends a marks file to ELMS 200 with the current closing prices. ELMS 200 compares these prices with closing prices from other services to verify correctness of the closing prices from clearing corp. 50. In case of any differences, the breaks are resolved. ELMS 200 applies the marks to all positions
- Positions - This process supports daily updating of a contract, which can change during its life cycle. A position at any point in time is given by

$$New\ Contract\ Value = (Marked\ Contract\ price * 1.02)\uparrow * (Shares - Returned/recalled\ Shares)$$

- Trades - This process captures all the changes during the life of the trade. Upon closure, the contract is archived and stored for future reference. A trade blotter shows, at any point in time, the list of all open contracts with the latest values.
  End-of-month (EOM) processes 720B4 includes
- Rebates - Movement of rebates on a monthly basis takes place in the same process as outlined in the flow outlined for daily rebate management and settlement.
  Manual processes 720B5 includes
- Break management - Ensures all contracts are in balance both internally to ELMS 200 and externally, with regard to clearing corp. 50.

System components 720C include trade receiving 720C1, clearing and settlement 720C2, interfaces 720C3, contract life cycle 720C4, security master 720C5, price feed 720C6, corporate actions 720C7, user creation and management 720C8, credit maintenance 720C9, reconciliation 720C10, billing and general ledger (GL) 720C11, reports 720C12, scheduled tasks 720C 13. As explained above, a trade undergoes novation into two contracts, that is, a contract is one side of an original trade with clearing corp. 50 being the other side.

Trade receiving 720C1 includes

- New Trades - When orders are matched in trading module 710, a new trade is received. Clearing corp. 50 performs a novation to transform a trade into two transactions.
- Trade Reallocation - Trade reallocation refers to allocating an existing trade to another member.
- Trade Cancellation - Prior to settlement, a trade can be cancelled.
- Participation Trades - A participation trade is a trade of an NCM in which its CM automatically participates. An internalization percentage is set-up in user management in middle office module 720 and passed to trading module 710. When an NCM enters an executable quote, a fixed percentage of the quote is automatically inserted for the NCM's CM as the price taker at execution. For example, assume a CM sets its participation at 10% for XYZ symbol loans made by one of its NCMs. When the NCM enters into a trade (stock loan) for 10,000 shares of XYZ, then 10% or 1,000 shares of this trade are attributed to the NCM's CM at execution.
  Clearing and settlement 720C2 includes
- Trade Settlement - This module keeps track of settlement notices from depository corp. 60, relayed by clearing corp. 50, for trades. This module also notifies participants to a trade that settlement has occurred.
- Trade Splitting - When an order is filled by multiple counterparties, the trade is referred to as a "split trade".
- Partial Settlement - When an order is only partially filled at an auction, the partial fill portion is indicated as being a partial fill.

Interfaces 720C3 includes

- Trading module 710 interface - The interface with trading module 710.
- Clearing corp. 50 interface - The interface with clearing corp. 50.
- FTI interface - The interface with FT Interactive, a third party.
- Prime Broker interfaces - The individual interfaces with prime brokers.
- LoaNet interface - The interface with Loanet, a third party.
- Equilend interface - The interface with Equilend, a third party.

Contract life cycle 720C4 includes

- New /Trades - After a trade is novated into two contracts, this module tracks the contract until it ends due to stock return or other event such as recall. This information is used in calculating the ratings for each trader, discussed above.
- Rebate Calculation - This module calculates the daily rebates for outstanding stock loans, by multiplying the nominal value of the loan by its daily rate, the daily rate being determined at the time of the trade.
- Mark-to-market - On a daily basis, clearing corp. 50 updates the prices of outstanding loans based on market activity; this module transfers the information from clearing corp. 50 to the records for the individual contracts.
- Returns/Recalls - This module tracks events that terminate a contract, generally stock returns but sometimes other events.
- Position Calculation - This module calculates the outstanding position, that is, the amount of stock being loaned. Today's position is the previous day's position plus new stock loans less terminated loans. Termination occurs due to a return or a recall or possibly an underlying corporate event such as a merger.

Security master 720C5 includes

- Underlying securities upload - This module enables viewing and editing of the characteristics of securities traded in ELMS 200.
- Instrument setup - allows individual instruments to be updated. An instrument is a security in the primary or secondary market.
- Manual underlying creation - enables creation of a security on a manual basis, rather than from the eligible list received from clearing corp. 50.
- Clearing corp. 50 eligible list - receives a list of securities eligible to be traded from clearing corp. 50.
- Stability calculation - calculates a stability value for a transaction, used in determining the rating for a trader, based on whether the loan fulfilled the terms of the trade.
- Credit Impact calculation - determines the amount of credit available to each trader based on their credit limit, mark-to-market of existing loans, termination of existing loans, and new loans.

Price feed 720C6 includes

- Underlying price feed upload - receives prices for underlying securities for which stock loans can be made in ELMS 200.

- Marks file upload - receives a file from clearing corp. 50 of the daily value of securities traded in ELMS 200.
- Corporate actions 720C7 (a corporate action is an event initiated by a public company which affects the securities issued by that company) includes

- Dividend processing - This process includes cash dividends and stock dividends.
  Currently loans are held broker to broker. So the borrower that receives the cash dividend pays it to the lender. Clearing corp. 50 does not get involved. In ELMS 200, the borrower doesn't know the lender. ELMS 200 identies cash dividends due from one party to another and send instructions to clearing corp. 50 to debit the payers account while crediting the payees account effective payable date. Information will be passed on to both the payer and the payee by ELMS 200 in order to communicate that this transaction is taking place.
  Every night, new stock dividends are expected to upload to ELMS 200 from depository corp. 60. A rough estimate is that 99% are uploaded. For those that upload, ex-dividend dates are manually entered. Dividends that were not automatically uploaded are obtained from a third party dividend service report and are manually entered. Should a stock dividend exist, an inventory snapshot is taken on the day after record date (R+1). This snapshot is used to allocate the proper number of shares on allocation date. This entire process is done manually.

- Identifier changes - This process updates changes to the identifier of an underlying stock, for example, ISIN for IBM changes from US4592001014 to US9999999999. Some cusip changes are uploaded to ELMS 200 from depository corp. 60, while others are manually obtained from a third party cusip change reporting service. Should a cusip change exist in either the system or the CA Advisory Report, shares are manually adjusted using current inventory on allocation date.

- All other corporate actions - This process supports Rights Issues, Stock Splits, Spin-offs, Reverse Stock Splits, Share Redenominations, Share conversions, New Vehicle Stock Dividends, Warrant Offering, Dutch Auctions, Mergers, Delisting, Share Repurchase and so on.

○ When Rights are issued, shareholders have the option to obtain a specified number of shares from the firm at an attractive price (lower than the market) during a specified window. The shareholder may choose to take up the offer, sell the rights or simply let them lapse if they deem them not to be worthwhile.

○ A Stock Split increases the number of outstanding shares in circulation based on the given terms of the offer. At the same time, the price in the market decreases in an inversely proportional manner as per the terms of the stock split.

○ A Reverse Stock Split is the reduction of the number of shares in circulation as per the terms of the offer. In this scenario, the market price increases in an inversely proportional manner as per the terms of the offer.

○ In a Share Redenomination, shares issued in a currency are converted into another currency thus changing the value of the security. Shares will change according to the currency in which it was converted.

○ When a company converts its shares into another category (e.g.: saving shares into ordinary shares), the exchange ratio must be communicated.

○ Dividends are payments made by a company to its shareholders usually paid in cash. At times, dividends may instead take the form of securities or cash/securities. They could be distributed in the form of a new type of share vehicle.

○ A Warrant is a security which entitles the holder to buy stock of the underlying company at a specified price which is higher than the stock price at the time of issue.

○ A Dutch Auction is an event occurring fairly infrequently usually reserved fir International based securities. Holders submit prices within a range in order to determine how many shares are accepted to take part in the event. The terms are specific to the event in question.

○ With a merger between two companies, the merged companies cease to exist as they become a single entity. Terms are announced according to an exchange ratio. In a takeover, one company takes on another and there are similar terms announced as per the company being taken over as far as receipt of cash or shares.

○ Delisting refers to the practice of removing a security of a particular company from an exchange so investors may no longer trade shares of that firm on that exchange.

○ Share Repurchase refers to a transaction in which a firm buys back shares of its own stock, thereby decreasing shares outstanding and often increasing the stock price.

User creation and management 720C8 includes

- Counterparty management - In accordance with legal agreements, relationships between trading entities in ELMS 200 can be created and edited.
- Account management - enables creation and managing of trading accounts used by traders in ELMS 200.
- Individual user management - enables creation and managing of individual user accounts, including privileges, credit limits, accessible accounts and so on.
- Relationship management - enables a NCM to request a clearing relationship with a CM, and a CM to accept or decline an NCM's request.

The Credit maintenance module maintains real time credit figures for all trading members. The credit figures are aggregated across primes. The Prime Broker also has the ability to allocate credit amongst the various trading members dynamically. Changing credit percentage for one of the trading members should dynamically update it for all the trading members in the family. Prime brokers can increase their credit limits by depositing cash. The credit figures are maintained at the parent and the child level. The credit details are updated with each trade, returns, recalls and cancellations. The credit is maintained on both net as well as gross basis. In case of insufficient credit, the trades are allowed only if the member frees up some credit by making returns. Credit maintenance 720C9 includes

- Credit allocation - set credit limits for CMs and NCMs
- SOD credit calculation - At the start of each day, the credit figures for each counterparty needs to be worked upon. The start of day credit figure should factor in any of the outstanding rebate payments/receivables.

$$\textit{Start of day Credit Available} = \textit{Credit Limit} - \textit{Net Credit used} +/- \textit{Rebate Outstanding}$$

Middle office module 720 passes the start of day credit figures for each of the NCMs and their respective CMs to trading module 710 based on the above calculations. There can be multiple records for the NCM based on its credit limits with CMs. Credit figures are determined based on the credit limits and the trades done by the users.

$$Contract\ price = (Closing\ price * 1.02) \uparrow$$

$$Contract\ Value = Contract\ price * Shares$$

$$Loan\ Value = \Sigma\ Contract\ Value\ for\ Loans$$

$$Borrow\ Value = \Sigma\ Contract\ Value\ for\ Borrows$$

$$Net\ Credit\ Used = ABS(Loan\ Value - Borrow\ Value)$$

$$Gross\ Credit\ Used = Loan\ Value + Borrow\ Value$$

$$Net\ Credit\ Available = Net\ Credit\ Limit - Net\ Credit\ Used$$

$$Gross\ Credit\ Available = Gross\ Credit\ Limit - Gross\ Credit\ Used$$

At any point in time, to calculate the credit figures, the latest positions should be used. The following things can change any contract and the credit figure accounts for all the events: Returns, Recalls, Cancellations, Mark to market

- Credit updates - Every change to any transaction updates the credit figures for the counterparty, including New Trades, Returns and Recalls.

Reconciliation 720C10 includes functions for manually processing contracts that were indicated as exceptions by modules in ELMS 200.

Billing and general ledger (GL) 720C11 includes assessing trading fees, preparing bills for members, and maintaining a general ledger for ELMS 200

Reports 720C12 includes preparation and delivery of various reports relating to activity in ELMS 200.

Scheduled tasks 720C13 includes

- Create tasks
- Edit created tasks
- Trade Life Cycle - receive new trades and create corresponding contracts, keep track of existing contracts, update positions due to recalls, returns, corporate actions and so on, audit trail
- Rebate Management - calculate rebatesand updates accounts as described above
- Corporate Actions - update positions to reflect various corporate actions
- Mark To Market - receive marks (daily closing prices) file from clearing corp. 50, update positions
- Reconciliation - conduct position reconciliation and corporate action reconciliation with clearing corp. 50, reconcile the credit lines for CMs and NCMs
- Change in credit lines

Although an illustrative embodiment of the present invention, and various modifications thereof, have been described in detail herein with reference to the accompanying drawings, it is to be understood that the invention is not limited to this precise embodiment and the described modifications, and that various changes and further modifications may be effected therein by one skilled in the art without departing from the scope or spirit of the invention as defined in the appended claims.

## CLAUSES

Aspects of the invention are set out in the following three sets of numbered independent and dependent clauses.

<u>First set of numbered independent and dependent clauses:</u>

1. A method for stock loan processing, comprising: forming, via a software program executing on a computer, a stock loan contract between a borrower and a lender, sending the stock loan contract to a central clearing party that performs a novation in which first and second contracts are substituted for the stock loan contract, the first contract being between the borrower and the central clearing party, the second contract being between the lender and the central clearing party, and whereby the borrower and lender are anonymous to each other.

2. The method of clause 1, wherein the central clearing party performs the novation after clearance and settlement of the stock loan contract.

3. The method of clause 1, further comprising providing price discovery relating to the stock loan contract prior to the formation of the stock loan contract.

4. The method of clause 1, further comprising sending a fail to receive transaction and a fail to deliver transaction to the central clearing party in place of the stock loan contract.

5. The method of clause 1, wherein the stock loan contract specifies an amount of stock provided by the lender and an amount of collateral provided by the borrower and a rebate rate for the collateral.

6. The method of clause 5, further comprising determining, by the software program, a daily rebate payment.

7. The method of clause 6, further comprising sending a notice of the daily rebate payment to the central clearing party so that the central clearing party obtains funds from an ower of the daily rebate payment and provides funds to a recipient of the daily rebate payment.

8. The method of clause 5, further comprising determining, by the software program, a daily mark-to-market payment for the collateral.

9. The method of clause 5, wherein the central clearing party determines a daily mark-to-market payment for the collateral, and adjusts an account value of the borrower in accordance with the determined mark-to-market payment.

10. The method of clause 1, further comprising receiving a notice of a recall from the lender, and, via the software program, designating a specified borrower to fulfill the recall.

11. The method of clause 10, further comprising sending, via the software program, the notice of the recall to the central clearing party.

12. The method of clause 10, further comprising sending, via the software program, a stock purchase order to an independent broker to satisfy the recall when the specified borrower fails to fulfill the recall within a predetermined time.

13. The method of clause 1, further comprising receiving a notice of a return from the borrower, and, via the software program, designating a specified lender to fulfill the return.

14. The method of clause 13, further comprising sending, via the software program, the notice of the return to the central clearing party.

15. The method of clause 13, further comprising sending, via the software program, a stock sell order to an independent broker to satisfy the return when the specified lender fails to fulfill the return within a predetermined time.

Second set of numbered independent and dependent clauses:

1. A method for a clearing member to sponsor trading activity of a non-clearing member, comprising: receiving an order from the non-clearing member identifying the clearing member as associated with the order, matching, via a software program executing on a computer, the non-clearing member order with an order from another member to create a matched trade, the matched trade specifying an amount of stock being lent, an amount of collateral and a rebate rate for the collateral, and sending the matched trade to a central clearing party that performs a novation in which first and second contracts are substituted for the matched trade, the first contract being between the clearing member and the central clearing party, the second contract being between the other member and the central clearing party, whereby the other member and the clearing member are anonymous to each other.

2. The method of clause 1, wherein the matched trade is sent to the central clearing party as a first notice representing the activity of the clearing member and a second notice representing the activity of the other member.

3. The method of clause 1, wherein the matching occurs via a batch auction operated by the software program.

4. The method of clause 3, wherein an actual start time of the batch auction is a predetermined start time plus a random time offset.

5. The method of clause 4, wherein the software program determines an equilibrium price for the batch auction, the equilibrium price being selected to maximize the number of shares matched in the auction.

6. The method of clause 1, further comprising providing, via the software program, a next batch auction for price discovery at a predetermined time, receiving orders for the next batch auction, storing the received orders until the next batch auction, and enabling a user of the software program to view the stored orders prior to the predetermined time.

7. The method of clause 6, wherein one of the stored orders can be selected by the user for formation of a trade prior to the predetermined time.

8. The method of clause 7, wherein the price of the trade is the price of a previous batch auction.

9. The method of clause 1, further comprising splitting, by the software program, the matched trade into a first portion for the non-clearing member and a second portion for the clearing member.

10. The method of clause 1, further obtaining permission from the clearing member prior to sending the matched trade to the clearing entity.

11. The method of clause 10, wherein permission is obtained by the software program consulting a predetermined list.

12. The method of clause 10, wherein permission is obtained by sending a request to the clearing member from the software program.

13. A method for trading, comprising: receiving, at a software program executing on a computer, a stock loan contract between a borrower and a lender, at least one of the borrower and the lender being a non-clearing member that is not a member of a clearing entity, creating, by the software program, a first notice of the stock loan contract representing the borrower's activity and a second notice of the stock loan contract representing the lender's activity, adjusting, by the software program, the first and second notices to substitute the clearing member for the one of the borrower and the lender that is the non-clearing member, and sending the adjusted first and second notices of the stock loan contract to the clearing entity.

14. The method of clause 13, further comprising obtaining permission from the clearing member prior to sending the adjusted first and second notices to the clearing entity.

15. The method of clause 14, wherein permission is obtained by referencing a predetermined permission list provided by the clearing member for the non-clearing member.

16. The method of clause 14, wherein permission is obtained by sending a request to the clearing member.

17. The method of clause 13, further comprising checking a credit limit for the non-clearing member prior to sending the trade report.

18. The method of clause 17, wherein the credit limit is set by the clearing member.

19. The method of clause 13, further comprising automatically splitting, by the software program, the stock loan contract into a first portion for the non-clearing member and a second portion for the clearing member.


Third set of numbered independent and dependent clauses:


1. A method of facilitating anonymous trade negotiation, comprising: enabling, via a software program executing on a computer, a buyer and a seller to send structured messages to each other to agree on terms of a trade, the structured messages lacking information identifying the buyer and the seller, and sending, by the software program, the trade to a central clearing party that performs a novation in which first and second contracts are substituted for the trade, the first contract being between the buyer and the central clearing party, the second contract being between the seller and the central clearing party.

2. The method of clause 1, wherein the structured messages have values for predefined fields and associated terms selected from a predefined set of terms.

3. The method of clause 1, wherein the buyer is a borrower, the seller is a lender and the trade is a stock loan contract.

4. The method of clause 1, wherein one of the buyer and the seller is a non-clearing member associated with a clearing member, and further comprising obtaining, by the software program, permission for the trade from the clearing member prior to sending the trade to the central clearing party.

5. The method of clause 4, wherein permission is obtained by the software program by referencing predetermined information.

6. The method of clause 4, wherein permission is obtained by sending a request from the software program to the clearing member.

7. The method of clause 4, wherein the clearing member is substituted for the one of the buyer and the seller that is a non-clearing member in the first and second contracts.

8. A method for enabling anonymous negotiation, comprising: displaying, by a computer program executing on a computer, at least one trading interest from one of a buyer and a seller to the other of the buyer and the seller, the trading interest lacking identification of its creator, receiving, at the computer program, a negotiation request from the other of the buyer and the seller for a trading interest selected from the at least one displayed trading interest, the negotiation request lacking identification of its creator, receiving a negotiation acceptance from the one of the buyer and the seller, and enabling, by the computer program, the one of the buyer and the seller and the other of the buyer and the seller to send structured messages to each other, the structured messages lacking identification of the buyer and the seller.

9. The method of clause 8, wherein the one trading interest includes values and a term associated with at least one of the values, and further comprising providing a screen-based interface having fields for entry of the values of the trading interest, and a list of terms associated with at least one of the fields from which the associated term is selected.

10. The method of clause 8, further comprising receiving the one trading interest, the one trading interest having counter-party filtering criteria, and selecting the other of the buyer and the seller to display the trading interest to in accordance with the counter-party filtering criteria.

11. The method of clause 8, wherein the trading interest is displayed in association with a rating of the one of the buyer and the seller, the rating relating to previous trading activity of the one of the buyer and the seller.

12. The method of clause 11, further comprising determining the rating by the computer program.

13. The method of clause 11, wherein the rating relates to whether the one of the buyer and the seller complied with previous trading agreements.

14. The method of clause 11, wherein the rating relates to how many previous trading interests of the one of the buyer and the seller resulting in respective trading agreements.

15. The method of clause 8, wherein the trading interest represents a desire to borrow or lend stock.

16. The method of clause 8, further comprising detecting, by the computer program, that an agreement to trade has been reached by the one of the buyer and the seller and the other of the buyer and seller, and obtaining permission for the trade on behalf of at least one of the buyer and the seller.

17. The method of clause 16, wherein permission is obtained by the software program by referencing predetermined information.

18. The method of clause 16, wherein permission is obtained by sending a request from the software program to a clearing member.

## Claims

1. A method of providing incentives to market participants in a marketplace having tiers, each of the market participants having a ranking based on the activity of the respective market participant during a specified time period, comprising:

   allocating, by a software program executing on a computer, an event to a first market participant in accordance with the ranking of the first market participant, the event corresponding to an action of a second market participant,
   assigning, by the software program executing on the computer, a financial incentive to the second market participant based on a comparison of an actual characteristic of the action with a threshold characteristic associated with a profile for the second market participant,
   adjusting, by the software program executing on the computer, a ranking of the second market participant to reflect the action, and
   producing, by the software program executing on the computer, a report when the action of the second market participant is outside of tier-normal behavior.

2. A method of allocating an event among a set of market participants, comprising:

   determining, automatically by a software program executing on a computer, a subset of eligible market participants from the set of market participants,
   selecting, automatically by the software program executing on the computer, one of the eligible market participants in accordance with rankings of the subset of eligible market participants, and
   allocating, automatically by the software program executing on the computer, the event to the selected eligible market participant.

3. The method of claim 2, wherein the event is a request for a new stock loan by a borrower, and the determining includes identifying lenders offering to lend shares of the stock.

4. The method of claim 2, wherein the event is a return of shares for an existing stock loan, the stock having a symbol, and the determining includes identifying lenders who have outstanding stock loans for the symbol.

5. The method of claim 2, wherein the event is a recall of shares for an existing stock loan, the stock having a symbol, and the determining includes identifying borrowers who have outstanding stock loans for the symbol.

6. The method of claim 2, wherein the rankings are based on activity of the market participants during a specified time period.

EP 2 141 648 A1

7. The method of claim 2, wherein the ranking of the market participants determine a respective number of appearances of the market participants in an ordered sequence of appearances, and selecting includes choosing the top appearance associated with any of the eligible market participants from the ordered sequence to identify the selected eligible market participant.

8. The method of claim 7, further comprising moving the appearance of the selected eligible market participant to the end of the ordered sequence after the event has been allocated to the selected eligible market participant.

9. The method of claim 2, further comprising evaluating whether the event has been fully allocated, and if not, selecting a next one of the eligible market participants in accordance with the rankings of the subset of eligible market participants.

10. The method of claim 9, further comprising determining a portion of the event for allocation to the selected eligible market participant.

11. The method of claim 2, wherein the market participants are eligible to participate in market tiers based on the respective activity histories of the market participants.

12. A method of assigning a financial incentive for an action having an actual characteristic to a market participant, comprising:

retrieving, automatically by a software program executing on a computer, a threshold characteristic associated with a type of the market participant, the type being based on the activity of the market participant during a specified time period,
comparing, automatically by the software program executing on the computer, the actual characteristic with the threshold characteristic to decide whether a financial incentive has been earned,
if earned, determining, automatically by the software program executing on the computer, a value for the financial incentive, and
assigning, automatically by the software program executing on the computer, the determined value of the financial incentive to the market participant.

13. The method of claim 12, wherein the determining includes summing a daily amount over a number of days associated with the action.

14. A method of determining a ranking of a market participant in a market separated into tiers, where market participants are eligible to participate in respective tiers based on their behavior, comprising:

comparing, automatically by a software program executing on a computer, behavior of a market participant to tier-normal behavior, and
producing, automatically by the software program executing on the computer, a report when the participant is outside the tier-normal behavior.

15. The method of claim 14, further comprising switching, automatically by the software program executing on the computer, the market participant to a different tier when the behavior of the market participant is outside tier-normal behavior.

37

EP 2 141 648 A1

D: Cash Collateral $102

A: Cash Collateral $105

| Lender 30 | Prime Broker 20 | Borrower (Short Seller) 10 |

F: Interest on Cash Collateral $ff
E: Securities Loan $100

C: Interest on Cash Collateral $cc
B: Securities Loan $100

## Fig. 1 (Prior Art)

| Lender 30 | Prime Broker 20 | Borrower (Short Seller) 10 | Executing Broker 60 |

Exchange 70

## Fig. 2 (Prior Art)

| Buyer 90 | Executing Broker 80 |

Fig. 3A (Prior Art)

EP 2 141 648 A1

| Lender 30 | Prime Broker 20 | Borrower 10 | Ex. Broker 60 | Exchange 70 | Ex. Broker 80 | Buyer 90 |
|---|---|---|---|---|---|---|

realize loan
needed 170

inventory
175

yes

no

receive request
185

request loan
180

provide loan
190

receive loan
195

receive loan
199

make loan
198

Fig. 3B (Prior Art)

X: Cash Collateral $103

| Lender 35 | → | Electronic Loan Market System (ELMS) 200 | ← | Borrower 15 |

Z: Interest on Cash Collateral $zz
Y: Securities Loan $100

## Fig. 4

(Lender) PLP 230

(Lender) CLP 240

(Lender) EP 250

ELMS 200

Primary Market 210

Secondary Market 220

(Borrower) CLP 241

(Borrower) EP 251

Trade Reporting Facility 40

Clearing Corp 50

## Fig. 5

EP 2 141 648 A1

Fig. 6

Fig. 7

EP 2 141 648 A1

EP 2 141 648 A1

TRF 40          CC 50          PLP 230          ELMS 200          EP 251

| submit inventory 300 | → | receive inventory 305 |

receive request
315    ←    request share loan
310

allocate inventory
as f(borrower and
lender rankings)
320

financial incents
322

receive
loan match report
335    ←    send
loan match report
325    →    receive
loan match report
330

receive
loan match report
340    ←

end of day:
evaluate rankings
350

# Fig. 8A

ELMS 200

```
┌─────────────────────────────┐
│   rank borrowers and lenders │
│     based on recent activity │
│              352             │
└─────────────────────────────┘
              │
┌─────────────────────────────┐
│   compare participant behavior│
│        to tier behavior      │
│              353             │
└─────────────────────────────┘
              │
┌─────────────────────────────┐
│  suggest which participants should│
│    be switched to different tier │
│              354             │
└─────────────────────────────┘
              │
┌─────────────────────────────┐
│   determine wheel appearances │
│     based on participant rankings│
│              356             │
└─────────────────────────────┘
              │
┌─────────────────────────────┐
│    randomize wheel sequences │
│              358             │
└─────────────────────────────┘
```

Fig. 8B

ELMS 200

```
┌─────────────────────────────────┐
│  sort stock loan inventory offers and│
│     stock loan requests by price │
│              372             │
└─────────────────────────────────┘
              │
┌─────────────────────────────────┐
│     determine portion to match │
│              373             │
└─────────────────────────────────┘
              │
┌─────────────────────────────────┐
│  match loan request of top borrower on wheel│
│  BA with inventory of top lender on wheel LA│
│              374             │
└─────────────────────────────────┘
              │
          ╱ B's quantity filled ╲   no
          ╲        376        ╱ ─────────┐
              │ yes                      │
                              ┌─────────────────────────┐
                              │ match top borrower with │
                              │ next lender on wheel LA │
                              │           378           │
                              └─────────────────────────┘
┌─────────────────────────────────┐
│  move just matched appearances to│
│    bottom of respective wheels │
│              380             │
└─────────────────────────────────┘
              │
          ╱ another borrower ╲   no
          ╲       382       ╱ ──────┐
              │ yes                 │
    yes   ╱ more inventory ╲        │
   ───────╲      384       ╱ ───────┘
              │ no
```

Fig. 8C

PLP 230  ELMS 200  EP 251

```
                      ┌─────────────────┐   ┌──────────────────┐
                      │  receive return │◄──│ initiate share return │
                      │       405       │   │        400        │
                      └─────────────────┘   └──────────────────┘
┌─────────────────┐   ┌─────────────────┐
│ receive return  │◄──│ allocate return as │
│ allocation 415  │   │ f(lender ranking) │
└─────────────────┘   │       410       │
                      └─────────────────┘

      negative    ╱ borrower ╲    positive
         ┌────────  incentive  ────────┐
         │          ╲   420   ╱         │
         ▼              │none            ▼
  ┌──────────────┐      │        ┌──────────────┐
  │ debit borrower│     │        │ credit borrower│
  │      425     │      │        │      435     │
  └──────────────┘      │        └──────────────┘
         │              │                │
         ▼              │                ▼
  ┌──────────────┐      │        ┌──────────────┐
  │ credit lenders│     │        │ debit lenders │
  │      430     │      │        │      440     │
  └──────────────┘      │        └──────────────┘
         │              │                │
         └──────────────┴────────────────┘
```

**Fig. 9A**

ELMS 200

```
┌──────────────────────┐
│ identify eligible lenders │
│          450          │
└──────────────────────┘
           │
┌──────────────────────┐
│ determine portion to assign │
│          451          │
└──────────────────────┘
           │
┌──────────────────────┐
│ assign return to top lender on │
│       wheel LR        │
│          452          │
└──────────────────────┘
           │
           ▼
      ╱ return quantity ╲   no   ┌──────────────────────┐
     ╱  fully assigned   ╲─────► │ assign return to next │
     ╲      454         ╱        │ lender on wheel LR    │
        yes │                    │          456          │
            │                    └──────────────────────┘
            ▼
┌──────────────────────┐
│ move just assigned lender │
│ appearances to bottom of │
│       wheel LR        │
│          458          │
└──────────────────────┘
```

**Fig. 9B**

```
          ┌─────────────────────────┐
          │  get profile for this type of │
          │   market participant     │
          │          470             │
          └─────────────────────────┘
                      │
          ┌─────────────────────────┐
          │  compare action with profile │
          │          472             │
          └─────────────────────────┘
                      │
               ╱──────────────╲
              ╱   incentive     ╲      no
              ╲      474        ╱──────────┐
               ╲──────────────╱           │
                      │ yes               │
          ┌─────────────────────────┐     │
          │   compute incentive      │     │
          │          476             │     │
          └─────────────────────────┘     │
                      │                    │
                      │◄───────────────────┘
                      │
```

# Fig. 9C

PLP 230 | ELMS 200 | EP 251 | ELMS 200

issue share recall
500

receive recall
505

allocate recall as
f(borrower ranking)
510

receive recall
allocation 515

incentive
520

yes

no

debit lender
525

credit borrowers
530

identify eligible borrowers
550

determine portion to assign
551

assign recall to top borrower
on wheel BR
552

recall quantity
fully assigned
554

no

yes

assign recall to next
borrower on wheel BR
556

move just assigned borrower
appearances to bottom of
wheel BR
558

## Fig. 10A

## Fig. 10B

EP 2 141 648 A1

Fig. 11
(Prior Art)

Fig. 12

EP 2 141 648 A1

| CM-1 House Account |

CM-1 {
- CM-1 Affiliate-1 Account
  - CM-1 Affiliate-1 Trading Account-1
  - CM-1 Affiliate-1 Trading Account-2
  - CM-1 Affiliate-1 Trading Account-3
  } NCM-1
- CM-1 Affiliate-2 Account
  - CM-1 Affiliate-2 Trading Account-1
  } NCM-2

• • •

- CM-1 Affiliate-N Account
  - CM-1 Affiliate-N Trading Account-1
  - CM-1 Affiliate-N Trading Account-2
  } NCM-N

Fig. 13

Fig. 14

Fig. 15

```
        ┌──────────────────────────────────┐
        │  Negotiated Trade Facility 714C   │
        └──────────────────────────────────┘
                        │
        ┌──────────────────────────┐
        │      Receive new-TI       │
        │          1200             │
        └──────────────────────────┘
                        │
        ┌──────────────────────────┐
        │       Get TIs for         │
        │ same symbol, other side   │
        │          1205             │
        └──────────────────────────┘
                        │
              ╱ Counterparty ╲   yes   ┌─────────────────────────┐
             ╱  filtering 1210 ╲──────▶│  Retain only TIs having │
              ╲               ╱        │   TI creators satisfying │
                    │ no               │    filtering criteria    │
                    │◀─────────────────│          1215            │
                    │                  └─────────────────────────┘
        ┌──────────────────────────┐
        │       Display TIs to      │
        │   new-TI creator 1220     │
        └──────────────────────────┘
                        │
        ┌──────────────────────────┐
        │     Display new-TI to     │
        │ creators of displayed TIs │
        │          1225             │
        └──────────────────────────┘
                        │
              ╱ Negotiation ╲   yes
             ╱  request 1230 ╲──────────────▶
              ╲             ╱
                    │ no
             ┌──────────────┐
             │     Done     │
             └──────────────┘
```

Display negotiation
request to counterparty
1235

Negotiation
acceptance 1240    no

yes

Enable counterparties
to send structured
messages 1245

Trade agreement    no
1250

yes

NCM    no
1255

yes

Get CM approval
1260

Report trade to
middle office 720
1265

Fig. 16

# CREATE TRADING INTEREST

Symbol [        ]

Side    o **BORROW**   o **LEND**

Quantity [        000]    Terms [None ▽]

x last close price ____ = contract value $_____

Rebate rate [-0.0    ]    Terms [None ▽]

Duration [        ]    Terms [None ▽]

Your stability rating ____
Your success rating ____

Optional Counter-party filtering:

Stability rating [        ]

Success rating [        ]

Trade volume rating [        ]

Fig. 17

EP 2 141 648 A1

```
                          ┌─────────────────────┐
                          │  Middle Office 720  │
                          └─────────┬───────────┘
         ┌────────────────────────┼──────────────────────────┐
┌────────┴──────────┐   ┌─────────┴──────────┐   ┌───────────┴─────────────┐
│ Environment 720A  │   │ Daily Processes 720B│   │ System Components 720C  │
└────────┬──────────┘   └─────────┬──────────┘   └───────────┬─────────────┘
┌────────┴──────────────┐  ┌──────┴─────────────┐  ┌─────────┴─────────────┐
│Reference Data Setup 720A1│ │ Security Master 720A2│ │ User Management 720A3 │
└───────────────────────┘  └────────────────────┘  └───────────────────────┘
```

Holiday and Calendar Setup
Country Master Setup
Currency Master Setup

Underlying Securities Setup
Primary Instrument Setup
Fed Funds Setup
Price Feed Setup

Counterparty Setup
Account Setup
User Setup
Relationship Setup
Permissions Setup

## Fig. 18A

```
                        ┌─────────────────────┐
                        │  Middle Office 720  │
                        └─────────────────────┘
          ┌──────────────────────┼──────────────────────────┐
┌─────────────────────┐ ┌─────────────────────┐ ┌──────────────────────────┐
│  Environment 720A   │ │ Daily Processes 720B│ │ System Components 720C    │
└─────────────────────┘ └─────────────────────┘ └──────────────────────────┘
              ┌──────────────────┼───────────────────────┐
┌──────────────────────────┐ ┌─────────────────────┐ ┌──────────────────────────┐
│ Start of Day (SOD) Processes│ │  Intra Day Processes│ │ End of Day (EOD) Processes│
│          720B1           │ │       720B2         │ │          720B3           │
└──────────────────────────┘ └─────────────────────┘ └──────────────────────────┘
```

Trade Receive Interface
Clearing and Settlement Interface
Buy-In Processing
Sell-Out Processing

Apply Calculations
Upload to Trading Module 710
Download from External Vendor
Download from Clearing corp. 50
Upload to CM interface
Generate reports

Rebates
Marks
Positions
Trades

```
┌──────────────────────────┐   ┌──────────────────────────┐
│ End of Month (EOM) Processes│ │  Manual Processes 720B5  │
│          720B4           │   └──────────────────────────┘
└──────────────────────────┘
```

Rebates
Security Master

Break Management
Cancellation

# Fig. 18B

EP 2 141 648 A1

Fig. 18C

EP 2 141 648 A1

Fig. 19

Independent Broker    Lender (CM)         ELMS 200              Borrower (CM)        Clearing Corp. 50

Day T, Recall 1100 → Send Recall Notice 1105 → Receive 1110 → Receive 1111

Day T+3, stock returned? 1120 — yes

can return stock 1115 — no

Receive 1127 ← Instruct Ind. Broker to buy shares 1125 — no

Receive 1135

Return stock 1116 — yes

Eliminate pos. rebates, stop mark-to-mkt 1130

Ask for help 1118

Purchase shares 1140

Day T+n 1148 — yes — no

Receive 1149

Cash settle 1153 — yes

Send Notice of Buy-In terms 1145

Receive 1150

Send cash settle 1152

Transfer shares 1155

Collateral Value > Buy-In Amt 1160 — no — yes

Receive 1147 ← Cancel buy order 1154

Receive 1185

Pay commission and fees 1180

Transfer cash from Borrower to Ind. Broker 1170

Transfer cash from Ind. Broker to Borrower 1165

Close stock loan 1190

Close stock loan 1175

EP 2 141 648 A1

EP 2 141 648 A1

Independent Broker | Lender (CM) | ELMS 200 | Borrower (CM) | Clearing Corp. 50

Fig. 20

Europäisches
Patentamt

European
Patent Office

Office européen
des brevets

**EUROPEAN SEARCH REPORT**

Application Number

EP 09 25 1672

| | **DOCUMENTS CONSIDERED TO BE RELEVANT** | | |
|---|---|---|---|
| Category | Citation of document with indication, where appropriate, of relevant passages | Relevant to claim | CLASSIFICATION OF THE APPLICATION (IPC) |
| X | US 2002/055901 A1 (GIANAKOUROS NICHOLAS B [US] ET AL) 9 May 2002 (2002-05-09) * paragraphs [0080] - [0082]; figures 1,2 * * abstract * ----- | 1-15 | INV. G06Q40/00 |

TECHNICAL FIELDS
SEARCHED      (IPC)

G06Q

The present search report has been drawn up for all claims

| Place of search | Date of completion of the search | Examiner |
|---|---|---|
| Munich | 20 August 2009 | Beatty, John |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 09 25 1672

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2009

| Patent document cited in search report | Publication date | Patent family member(s) | Publication date |
|---|---|---|---|
| US 2002055901 A1 | 09-05-2002 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6618707 B, Katz
- US 4592001014 A
- US 9999999999 A